# EUROPÄISCHE PATENTSCHRIFT

(11) **EP 4 058 271 B1**
(45) Veröffentlichungstag und Bekanntmachung des Hinweises auf die Patenterteilung: **01.11.2023**
(21) Anmeldenummer: 20810893.6
(22) Anmeldetag: 17.11.2020
(51) Int. Cl.: B29C 64/393, B29C 64/194, B33Y 50/02, B22F 10/66, B22F 10/85, B22F 12/90, B22F 10/38, B22F 10/50, B29C 64/188, B33Y 30/00

(54) **VORRICHTUNG UND VERFAHREN ZUM HERSTELLEN EINES DREIDIMENSIONALEN FORMGEGENSTANDES**
APPARATUS AND METHOD FOR MANUFACTURING A THREE-DIMENSIONAL MOULDED ARTICLE
APPAREIL ET PROCÉDÉ PERMETTANT DE FABRIQUER UN ARTICLE MOULÉ TRIDIMENSIONNEL

(30) Priorität: 17.11.2019 DE 102019007953; 18.11.2019 DE 102019007972
(43) Veröffentlichungstag der Anmeldung: 21.09.2022
(73) Patentinhaber: dp polar GmbH, 76344 Eggenstein-Leopoldshafen (DE)
(72) Erfinder: MATHEA, Hans, 76344 Eggenstein-Leopoldshafen Baden-Württemberg (DE)
(74) Vertreter: Huwer, Andreas
(86) Internationale Anmeldenummer: PCT/EP2020/082446
(87) Internationale Veröffentlichungsnummer: WO 2021/094628

(56) Entgegenhaltungen:
- DE-A1-102017 005 426
- DE-A1-102017 208 497
- US-A1- 2018 361 668

## Beschreibung

Die Erfindung betrifft eine Vorrichtung zum Herstellen eines dreidimensionalen Formgegenstandes mittels Materialauftrag in Schichten, die mindestens eine Materialabgabeeinrichtung zum Aufbringen von physikalisch oder chemisch verfestigbarem Material auf eine Druckunterlage oder eine darauf befindliche, verfestige Schicht des Formgegenstandes, eine Antriebseinrichtung zum Positionieren von Druckunterlage und der mindestens einen Materialabgabeeinrichtung relativ zueinander und eine Steuereinrichtung mit einem Datenspeicher zum Ablegen von Bilddaten des dreidimensionalen Formgegenstandes aufweist, wobei die Steuereinrichtung mit der Antriebseinrichtung und der mindestens einen Materialabgabeeinrichtung in Steuerverbindung steht. Weiterhin weist die Vorrichtung eine Überwachungseinrichtung zum Überprüfen der Schichten Sₙ des dreidimensionalen Formgegenstandes auf, wobei der Überwachungseinrichtung eine Auswerteeinrichtung nachgeordnet ist. Die Vorrichtung weist weiterhin eine Materialabtrageeinrichtung auf, wobei die Auswerteeinrichtung und die Materialabtrageeinrichtung in Steuerverbindung mit der Steuereinrichtung stehen und der Materialabgabeeinrichtung eine Nivellierungseinrichtung zum Nivellieren der jeweils aufgebrachten Schicht Sₙ nachgeordnet ist.

Außerdem betrifft die Erfindung ein Verfahren zum Herstellen eines dreidimensionalen Formgegenstandes mittels Materialauftrag in Schichten Sₙ mit n = 1 bis N, aufweisend folgende Schritte:
- Aufbringen von physikalisch oder chemisch verfestigbarem Material in Schichten Sₙ auf eine Druckunterlage,
- Überprüfen des dreidimensionalen Formgegenstandes im Hinblick auf mindestens einen vorhandenen Fehler.
- Nivellieren jeder jeweils aufgebrachten Schicht Sₙ;
- Feststellen einer Schicht Sₓ des dreidimensionalen Formgegenstandes, in welcher der mindestens eine Fehler erfasst wurde;
- Überprüfen der nachfolgenden Schichten Sₙ mit n=x+1 , x+2... auf fehlerhafte Geometrieänderungen des Formgegenstandes.

Im Bereich der additiven Verfahren mittels schichtweisem Materialauftrag ist beispielsweise das Dokument EP 3 294 529 B1 bekannt, das eine Vorrichtung und ein Verfahren zur Herstellung von dreidimensionalen Formgegenständen betrifft. Die in diesem Dokument gezeigte Vorrichtung bringt Material auf eine drehbare Druckunterlage auf und stellt unter hoher Geschwindigkeit und hoher Druckqualität den dreidimensionalen Formgegenstand her. Sollte ein Fehler an dem dreidimensionalen Formgegenstand während des Druckprozesses auftreten, muss der gesamte Formgegenstand als Abfall entsorgt werden und der Druckprozess neu gestartet werden. Tritt der Fehler erst am Ende eines Druckvorgangs auf, ist der Verlust größer als am Anfang des Druckvorgangs. Dies kann zu hohen bis sehr hohen Kosten führen, je nach Größe des zu druckenden Objekts. Dementsprechend erhöhen sich die Fertigungszeiten, was wiederum zu höheren Kosten führt. Nicht nur, dass finanzielle Verluste entstehen, auch spielt der Umweltgedanke eine Rolle, wenn große Mengen an Material vernichtet werden müssen.

Um dem zu begegnen wird beispielsweise in der DE 10 2017 208 497 A1 ein Korrekturprozess vorgeschlagen, der frühzeitig, d.h. umgehend jede gedruckte Schicht des dreidimensionalen Bauteils korrigiert, wenn während des Druckens der Schicht ein Fehler aufgetreten ist. Die Korrektur ist abhängig von der aufgetretenen Fehlerart. Wurde zum Beispiel in einem Bereich des Bauteils zu wenig Material aufgetragen wird im Korrekturprozess ein Materialauftrageprozess nur für diesen betroffenen Bereich durchgeführt. Der Korrekturprozess umfasst auch die Möglichkeit, dass bei fehlerhaften Stellen im geringfügigen Ausmaß, keine Korrektur der fehlerhaften Stelle erfolgt, sondern dass eine Anpassung der nachfolgenden Maschinencodes durchgeführt wird. Wurde zum Beispiel in einem Bereich des Bauteils zu viel Material aufgetragen, kann dieser Materialüberschuss mittels Schleifen und/oder Fräsen abgetragen werden. Nachteilig bei dieser Druckschrift ist jedoch, dass das Verfahren sehr viel Zeit kostet, da Neuberechnungen bei jeder nachfolgenden Schicht stattfinden müssen und dies zu Druckpausen führt. Weiterhin ist zu jeder Fehlerart ein Korrekturprozess definiert, so dass zwischen den verschiedenen Fehlerarten unterschieden wird. Nachteilig ist der Zeitaufwand für die Feststellung der einzelnen Fehlerarten und die vorgeschlagenen Reparaturmaßnahmen, wie Materialauffüllung bei Materialmangel bedeuten einen Verlust der Qualität des Bauteils.

Korrekturprozesse durch Materialabtrag sind ebenfalls aus der US 2018 / 0 071 987 A1 und der US 2018 / 0 361 668 A1 bekannt.

Die DE 10 2017 005426 A1 offenbart eine Vorrichtung zum Herstellen eines dreidimensionalen Formgegenstandes mittels Materialauftrag in Schichten aufweisend : -eine Materialabgabeeinrichtung zum Aufbringen von physikalisch oder chemisch verfestigbarem Material auf eine Druckunterlage oder eine darauf befindliche, verfestigte Schicht des Formgegenstandes;- eine Antriebseinrichtung zum Positionieren von Druckunterlage und der Materialabgabeeinrichtung relativ zueinander;- eine Steuereinrichtung mit einem Datenspeicher, zum Ablegen von Bilddaten des dreidimensionalen Formgegenstandes, wobei die Steuereinrichtung mit der Antriebseinrichtung und der Materialabgabeeinrichtung in Steuerverbindung steht;-eine Überwachungseinrichtung zum Überprüfen der Schichten des dreidimensionalen Formgegenstandes, wobei der Überwachungseinrichtung eine Auswerteeinrichtung nachgeordnet ist; -eine Materialabtrageeinrichtung wobei die Auswerteeinrichtung und die Materialabtrageeinrichtung in Steuerverbindung mit der Steuereinrichtung stehen; und eine Auswerteeinrichtung. Es wird ebenfalls ein entsprechendes Herstellungsverfahren in der DE10 2017005426 A1 offenbart.

Ausgehend von dem bekannten Stand der Technik liegt der Erfindung die Aufgabe zugrunde, eine Vorrichtung und ein Verfahren der eingangs genannten Art dahingehend weiterzubilden, dass die Nachteile aus dem Stand der Technik behoben werden, die Produktivität des Herstellungsprozesses gesteigert wird und trotzdem eine hohe Qualität des dreidimensionalen Formgegenstandes ermöglicht wird.

Die folgenden Definitionen werden verwendet:

### Druckprozess

Als Druckprozess wird in diesem Zusammenhang das Aufbringen von Material in Schichten verstanden, um einen dreidimensionalen Formgegenstand herzustellen.

### Materialabgabeeinrichtung

Unter einer Materialabgabeeinrichtung wird eine Einrichtung verstanden, mittels der ein verfestigbares flüssiges, pastöses, pulverförmiges oder gasförmiges Material schichtweise auf die Druckunterlage oder eine darauf befindliche, verfestigte Schicht des Formgegenstandes aufgebracht werden kann. Die Materialabgabeeinrichtung kann zur Abgabe von Materialportionen ausgestaltet sein, insbesondere als Inkjet-Druckkopf.

### Rückbauverfahren

Das Rückbauverfahren ist der Einsatz der Materialabtrageinrichtung zum schichtweisen Abtragen von Material des dreidimensionalen Formgegenstandes. Dieser Abtrag erfolgt in vollständigen Schichten, also die gesamte Druckfläche, und kann eine oder mehrere Schichten-Dicken in einem Durchgang abtragen. Nach dem Rückbauverfahren erfolgt ein Neudruck.

### Schicht S

Mit einer Schicht ist eine Materialschicht gemeint, die von der Materialabgabeeinrichtung auf die Druckunterlage oder auf eine bereits aufgebrachte Schicht aufgebracht wird.

### Unterste Schicht

Die unterste Schicht mit dem Index n=1 ist die erste Schicht, die von der mindestens einen Materialabgabeeinrichtung auf die Druckunterlage aufgebracht wird.

### Oberste Schicht S_{N}

Die oberste Schicht mit dem Index N ist die letzte Schicht, die die von der mindestens einen Materialabgabeeinrichtung auf die vorangegangene Schicht mit dem Index N-1 aufgebracht wurde, bevor der Druckprozess gestoppt wird. Der Druckprozess wird gestoppt, wenn ein Fehler detektiert wird oder wenn der Formgegenstand fertig gestellt wurde.

### Fehlerbehaftete Schicht Sₓ

Die fehlerbehaftete Schicht ist eine einzelne erste Schicht mit dem Index n zwischen n=1 und N, in der ein Fehler aufgetreten ist, der durch Materialabtrag behoben wird, wobei dieser Fehler Auswirkung auf die darauffolgenden Schichten hat.

Somit sind die auf die einzelne erste Schicht folgenden übereinander aufgebrachten Schichten ebenfalls fehlerbehaftet.

### Teilbereich T

Ein Teilbereich T besteht aus den abzutragenden Schichten mit dem Index N bis x (von der obersten Schicht bis zur fehlerbehafteten Schicht)

### Fehler

Der Begriff Fehler wird in diesem Zusammenhang derart verwendet, dass es sich dabei um Fehlstellen in dem dreidimensionalen Formgegenstand handelt. Als Beispiel werden Fehlstellen, die zu wenig Material beinhalten, wie Materialmangel, Schrumpf des Materials, o.ä., bei dem sich Abmessung und Gestalt einer Schicht ändern können, genannt.

### Slicer-Zeiger

Der Slicer-Zeiger Zs zeigt auf den Speicherplatz, in dem sich die Daten für jede einzelne Schicht mit den entsprechenden Koordinaten, Schichtdicke der Schicht usw. befinden, die für das im Bilddatenspeicher hinterlegte 3-D Modell generiert wurden.

### Objekt-Zeiger

Der Objekt-Zeiger Zo zeigt die Position der aktuell aufgebauten bzw. abgetragenen Schicht. Solange der Materialauftrag fehlerfrei verläuft sind Objekt-Zeiger Zo und Slicer-Zeiger Zs synchron und zeigen auf dieselbe Schicht. Im Fehler-Fall, in dem das Rückbauverfahren aktiviert wird, folgt der Objekt-Zeiger Zo dem Slicer-Zeiger Zs und zwar Schicht für Schicht, bis der Objekt-Zeiger Zo die Position des Slicer-Zeigers Zs erreicht.

Die vorstehend genannte Aufgabe wird bezüglich der Vorrichtung der eingangs genannten Art dadurch gelöst, dass die Auswerteeinrichtung zum Feststellen einer Schicht Sₙ mit n=x, in welcher mindestens ein Fehler von der Überwachungseinrichtung erfasst wurde, zum Überprüfen der nach der fehlerbehafteten Schicht Sₓ nachfolgenden Schichten Sₙ mit n=x+1, x+2... auf eine fehlerhafte Geometrieänderung des Formgegenstandes, die ein vorbestimmtes Maß überschreitet, zum Erzeugen eines Fehlersignals für die Schicht Sₓ bei fehlerhafter Geometrieänderung der nachfolgenden Schichten Sₙ mit n=x+1, x+2, ... und zum Weiterleiten des erzeugten Fehlersignals für diese erste der fehlerbehafteten Schichten Sₓ an die Steuereinrichtung ausgebildet ist; dass die Materialabtrageeinrichtung zum Abtragen des Materials eines Teilbereiches (T) des dreidimensionalen Formgegenstands von der zuletzt gedruckten Schicht S_{N} bis zu der fehlerbehafteten Schicht Sₓ ausgestaltet ist und dass die Auswerteeinrichtung, wobei die Materialabtrageeinrichtung derart ausgebildet ist, dass beim Abtragen des Materials vollständige Schichten Sₙ abtragbar sind.

Dass der Materialabgabeeinrichtung eine Nivellierungseinrichtung nachgeordnet ist, hat den Vorteil, dass ein Fehler mit Materialüberschuss, also zu viel aufgetragenes Material, nicht auftreten kann. Durch die Nivellierungseinrichtung wird die Schichtdicke automatisch begrenzt. D.h., dass eine Materialüberhöhung nivelliert wird und der Fehler "Materialüberschuss" somit nicht korrigiert werden muss. Vorteilhafterweise erfolgt die Nivellierung direkt nach dem Aufbringen des noch flüssigen Materials, so dass die Materialabtrageeinrichtung, die das bereits verfestigte Material abträgt, nicht zum Einsatz kommt. Vorteilhafterweise ist der Druckprozess durch eine Korrektur dieser Fehlerart nicht in Geschwindigkeit und Produktivität eingeschränkt. Dass die Überwachungseinrichtung den dreidimensionalen Formgegenstand im Hinblick auf mindestens einen vorhandenen Fehler überprüft, hat den Vorteil, dass die verschiedenen Fehlerarten, wie Materialmangel oder Geometrieänderungen bzw. Volumenänderungen aufgrund von Schrumpf des Materials der aufgebrachten Schichten Sₙ, erkannt werden. Vorteilhafterweise ist eine Auswerteeinrichtung nachgeordnet. Die nachgeordnete Auswerteeinrichtung stellt eine Schicht Sₙ (n=x) fest, in welcher der mindestens eine Fehler von der Überwachungseinrichtung erfasst wurde. Vorteilhafterweise ist dies eine Schicht Sₙ, auf die bereits mindestens eine weitere Schicht Sₙ₊₁ aufgetragen wurde. Deshalb kann der Druckprozess vorteilhafterweise in gewohnter Weise fortgeführt werden, ohne nach jeder Fehlerdetektion in einer Schicht Sₓ den Druckprozess zu stoppen und die fehlerbehaftete Schicht Sₓ abzutragen. In diesen nach der fehlerbehaftete Schicht Sₓ folgenden Schichten Sₙ mit (n=x+1, x+2...), zeigt sich die Auswirkung des Fehlers der fehlerbehaftete Schicht Sₓ. Dem Druckprozess wird somit vorteilhafterweise Zeit gegeben, bestimmte Fehler auszugleichen, die nachfolgend keine Auswirkung auf die Geometrie des Formgegenstandes haben. Erst wenn der in der Schicht Sₓ aufgetretene Fehler eine Geometrieänderung in den nachfolgenden Schichten bewirkt, die ein vorgegebenes Maß überschreitet, wird von der Auswerteeinrichtung ein Fehlersignal für diese fehlerhafte Schicht Sₓ erzeugt. Beispielsweise bei der eine Volumenänderung des Materials aufgetreten kann, die zu einem Schrumpf führt. Vorteilhafterweise wird eine fehlerhafte Geometrieänderung von der Überwachungseinrichtung erfasst und von der Auswerteeinrichtung wird entsprechend ein Fehlersignal für diese erste der fehlerbehafteten Schichten Sₓ, die in den nachfolgenden Schichten Sₙ eine Geometrieänderung bewirkt, erzeugt und an die Steuereinrichtung weitergeleitet, damit diese den Druckprozess dann stoppt. Vorteilhafterweise wird so nicht jede einzelne Schicht korrigiert, was die Herstellungszeit des Formgegenstandes enorm in die Höhe treiben würde, da die Überprüfung und Auswertung, die Feststellung der Position des Fehlers, die Entscheidung einer geeigneten Korrektur-Maßnahme und schließlich das Beheben des Fehlers sehr viel Zeit in Anspruch nimmt. Erst nachdem ein vorbestimmtes Maß überschritten wird, erfolgt eine Korrektur.

Vorteilhafterweise trägt die Materialabtrageeinrichtung das Material eines Teilbereiches (T) des dreidimensionalen Formgegenstands von der zuletzt gedruckten Schicht S_{N} bis zu der fehlerbehafteten Schicht Sₓ, für die ein Fehlersignal erzeugt wurde, ab. Die Materialabtrageeinrichtung und die Auswerteeinrichtung stehen in Steuerverbindung mit der Steuereinrichtung. Dadurch werden alle Schichten bis zu der fehlerbehafteten Schicht Sₓ abgetragen. Auf der fehlerbehafteten Schicht Sₓ sind bereits weitere Schichten aufgebracht. Es wird als nicht nur die oberste Schicht S_{N} abgetragen, sondern ein Teilbereich T von Schichten. Dies hat den Vorteil, dass der fehlerhafte Formgegenstand immer korrigiert werden kann, und nicht entsorgt werden muss.

Vorteilhafterweise umfasst der Teilbereich T des dreidimensionalen Formgegenstands von der zuletzt gedruckten Schicht S_{N} bis zu der fehlerbehafteten Schicht Sₓ mindestens eine vorzugsweise komplette Schicht Sₙ, insbesondere zwischen zwei und vier vorzugsweise komplette Schichten Sₙ, bevorzugt mehr als vier vorzugsweise komplette Schichten Sₙ. Somit ist es möglich das Rückbauverfahren effizient und ohne Zeitverlust zügig durchzuführen, da ein Abtragen, also ein Rückbau, jeder einzelnen Schicht zeitaufwendig und aufgrund kostenintensiver Auswerte-Intelligenz relativ teuer ist, was das Herstellungsverfahren des dreidimensionalen Formgegenstandes insgesamt verteuern würde.

Vorteilhafterweise ist die Materialabtrageeinrichtung derart ausgebildet, dass beim Abtragen des Materials vollständige Schichten n abtragbar sind. Damit ist keine Reparatur, wie Materialauffüllung in einer einzelnen Schicht bei beispielsweise bei dem Fehler "Materialmangel" notwendig, da immer die ganze Schicht Sₙ von der Materialabtrageeinrichtung abgetragen wird. Somit wird nicht zwischen den einzelnen Fehlerarten unterschieden, sondern für alle Fehlerarten wird ein Rückbauverfahren verwendet, das die einzelne Schicht nicht teilweise abträgt, sondern komplett. Dies vereinfacht die Auswertung und beschleunigt den Prozess.

Vorteilhafterweise ist die Materialabtrageeinrichtung zur spanabhebenden Bearbeitung ausgebildet, insbesondere mittels Fräsen, vorzugsweise Polieren, Schleifen und/oder Schaben.

Vorteilhafterweise ist die Materialabtrageeinrichtung derart ausgebildet, dass beim Abtragen des Materials die Dicke einer Schicht Sₙ oder die Dicke mindestens zweier Schichten Sₙ vorzugsweise komplett abtragbar ist. Damit können beliebig viele Schichten Sₙ abgetragen werden und das Rückbauverfahren kann beschleunigt eingesetzt werden.

Vorteilhafterweise ist die Überwachungseinrichtung als optische Überwachungseinrichtung, insbesondere eine CCD-Kamera, eine CCD-Kamera in Kombination mit Laserstrahl, eine optische oder mechanische Abtasteinrichtung, eine schichtdickenmessende Einrichtung oder ein Mess-Laser ausgebildet. Damit können fehlerbehaftete Schichten Sₓ mit einer hohen Genauigkeit festgestellt werden.

Vorteilhafterweise ist die Materialabgabeeinrichtung derart ausgebildet ist, dass sie in eine Parkposition bringbar ist, an der eine Servicestation zum Überprüfen einer Funktionsstörung der Materialabgabeeinrichtung und zum Beseitigen der eventuellen Funktionsstörung angeordnet ist. Somit kann die Materialabgabeeinrichtung gewartet werden, um eventuelle Störungen, die die Funktion beeinträchtigen zu beheben, während die Materialabtrageeinrichtung den Teilbereich mit den fehlerhaften Schichten abträgt. Gegebenenfalls kann die Materialabgabeeinrichtung beim Auftreten des Fehlersignals auch einfach gegen ein entsprechendes Ersatzteil ausgewechselt werden.

Vorteilhafterweise ist die Druckunterlage um eine Rotationsachse drehbar zu der mindestens einen Materialabgabeeinrichtung gelagert, so dass die Druckunterlage während des gesamten Druckprozesses kontinuierlich bewegt werden kann. Die ermöglicht einen schnellen Druckfortschritt.

Vorteilhafterweise ist die Antriebseinrichtung zum Positionieren der Materialabgabeeinrichtung relativ zur Druckunterlage, die in vertikaler Richtung feststeht oder zum Positionieren der Druckunterlage relativ zur Materialabgabeeinrichtung, die in vertikaler Richtung feststeht, ausgebildet. Dadurch, dass mehrere Schichten Sₙ gedruckt werden, bevor entschieden wird, ob das Rückbauverfahren eingeleitet wird, kann die Druckgeschwindigkeit ohne eine Unterbrechung beibehalten werden.

In einer weiteren vorteilhaften Ausgestaltung weist die Materialabtrageeinrichtung ein Materialabtragwerkzeug zum spanabhebenden Bearbeiten des Formgegenstandes auf, wobei das Materialabtragwerkzeug die Druckunterlage in mindestens einer Erstreckung derart überspannt, dass die Materialabtrageeinrichtung die Schichten S_{N} bis Sₓ komplett abträgt. Somit kann die Vorrichtung sehr effizient, effektiv und schnell in einem Arbeitsgang die volle, also komplette Fläche der fehlerbehafteten Schichten des bereits teilweise gedruckten Formgegenstandes abtragen. Der Abtrag erfolgt immer über die gesamte Druckfläche, also die Fläche einer kompletten Schicht. Die Anzahl der Schichten, die in einem Arbeitsgang abgetragen werden, richtet sich nach dem Teilbereich T, der zuvor bestimmt wurde.

Vorteilhafterweise sind Materialabtrageeinrichtung und Druckunterlage relativ zueinander um eine Höhe verfahrbar, die nach Maßgabe des abzutragenden Teilbereichs T der fehlerbehafteten Schichten S_{N} bis Sₓ des Formgegenstandes von der Auswerteeinrichtung vorgegeben ist und das Materialabtragwerkzeugt trägt die kompletten Schichten S_{N} bis Sₓ in einem Arbeitsschritt ab. Somit sind schnelle Bearbeitungszeiten im Rückbauverfahren möglich, da die Materialabtrageeinrichtung nur einmal über den Formgegenstand verfahren wird, um die fehlerbehafteten Schichten abzutragen.

Vorteilhafterweise weist das Materialabtragwerkzeug der Materialabtrageeinrichtung eine Längserstreckung entlang einer Achse auf, ist zylindrisch oder konisch ausgebildet und ist um seine Achse drehbar. Damit kann die Materialabtrageeinrichtung sowohl im kartesischen als auch im polaren Druckverfahren eingesetzt werden. Bei der konischen Ausbildung des länglichen Materialabtragwerkzeugs der Materialabtrageeinrichtung erstreckt sich der Konus zum äußeren Umfang der rotierenden Druckunterlage. Somit wird die höhere Geschwindigkeit am Außenumfang des Druckfelds berücksichtigt und es treten keine Ungenauigkeiten auf.

Die vorstehend genannte Aufgabe wird bezüglich des Verfahrens der eingangs genannten Art dadurch gelöst, dass
- ein Fehlersignal für diese erste der fehlerbehafteten Schichten Sₓ erzeugt und an eine Steuereinrichtung weitergeleitet wird, falls eine fehlerhafte Geometrieänderung der nachfolgenden Schichten Sₙ mit n=x+1, x+2... erfasst wurde, die ein vorbestimmtes Maß überschreitet;
- Stoppen des Materialauftragens in Schicht S_{N} nach Maßgabe des Fehlersignals;
- in den Bilddaten des Formgegenstandes ein Slicer-Zeiger (Zs) auf die erste fehlerhafte Schicht Sₓ gesetzt wird;
- ein Teilbereich (T) des dreidimensionalen Formgegenstands von der zuletzt gedruckten Schicht S_{N} bis zu der fehlerbehafteten Schicht Sₓ, für die ein Fehlersignal erzeugt wurde, abgetragen wird, wobei die Schichten S_{N} bis Schicht Sₓ vollständig abgetragen werden und
- danach die zuvor abgetragenen Schichten und eventuelle weitere Schichten bis zur Fertigstellung des Formgegenstands schichtweise aufgetragen und überprüft werden.

Die Vorteile der verfahrensgemäßen Lösung nach dem unabhängigen Anspruch 12 entsprechen den oben mit Bezug auf die Vorrichtung genannten Vorteilen. Weitere vorteilhafte Ausgestaltungen des Verfahrens der Erfindung sind in den Unteransprüchen angegeben.

Weitere Einzelheiten, Merkmale und Vorteile der vorliegenden Erfindung ergeben sich aus der nachfolgenden Beschreibung der Ausführungsbeispiele einer Vorrichtung zum Herstellen eines dreidimensionalen Formgegenstandes unter Bezugnahme auf die Zeichnungen.

### Es zeigt:

- Fig. 1: eine schematische Darstellung der Vorrichtung in einer Anordnung gemäß einem ersten Ausführungsbeispiel,
- Fig. 2: eine Seitenansicht eines Formgegenstandes und eines zugehörigen Bilddatenmodells im Druckprozess,
- Fig. 3: eine Seitenansicht des Formgegenstandes und des zugehörigen Bilddatenmodells nach Fehlerdetektion,
- Fig. 4: eine Seitenansicht des Formgegenstandes und des zugehörigen Bilddatenmodells bei Beginn des Rückbauverfahrens eines ersten Ausführungsbeispiels,
- Fig. 5 bis Fig. 8: eine Seitenansicht des Formgegenstandes und des zugehörigen Bilddatenmodells des ersten Ausführungsbeispiels während des Rückbauverfahrens,
- Fig. 9: eine Seitenansicht des Formgegenstandes und des zugehörigen Bilddatenmodells des ersten Ausführungsbeispiels nach dem Rückbauverfahren,
- Fig. 10: eine Seitenansicht des Formgegenstandes und des zugehörigen Bilddatenmodells des ersten Ausführungsbeispiels bei Beginn des neuen Druckprozesses,
- Fig. 11: eine Seitenansicht des Formgegenstandes und des zugehörigen Bilddatenmodells des ersten Ausführungsbeispiels nach Beendigung des neuen Druckprozesses
- Fig. 12: eine schematische Darstellung der Vorrichtung in einer Anordnung gemäß einem zweiten Ausführungsbeispiel,
- Fig. 13: eine Seitenansicht des Formgegenstandes und des zugehörigen Bilddatenmodells bei Beginn des Rückbauverfahrens des zweiten Ausführungsbeispiels,
- Fig. 14: eine Seitenansicht des Formgegenstandes und des zugehörigen Bilddatenmodells des zweiten Ausführungsbeispiels nach dem Rückbauverfahren,
- Fig. 15: eine Seitenansicht des Formgegenstandes und des zugehörigen Bilddatenmodells des zweiten Ausführungsbeispiels bei Beginn des neuen Druckprozesses,
- Fig. 16: eine Seitenansicht des Formgegenstandes und des zugehörigen Bilddatenmodells des zweiten Ausführungsbeispiels nach Beendigung des neuen Druckprozesses,
- Fig. 17: eine perspektivische Seitenansicht der Materialabtrageeinrichtung mit zylindrischem Materialabtragwerkzeug,
- Fig. 18: eine perspektivische Seitenansicht der Materialabtrageeinrichtung mit konischem Materialabtragwerkzeug und
- Fig. 19: eine Draufsicht auf die Materialabtrageeinrichtung nach Figur 18.

Die Erfindung wird nachfolgend in Form von Ausführungsbeispielen anhand der genannten Figuren detailliert beschrieben. In allen Figuren sind gleiche technische Elemente mit gleichen Bezugszeichen bezeichnet.

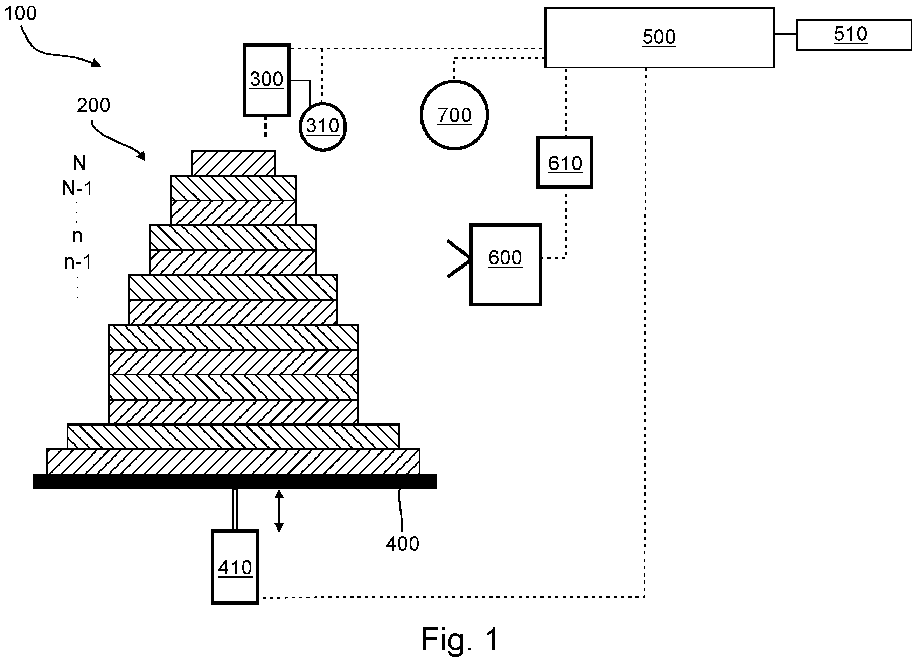

Figur 1 zeigt eine erfindungsgemäße Vorrichtung 100 in einer Anordnung gemäß einem ersten Ausführungsbeispiel. Die Vorrichtung 100 dient dazu, einen dreidimensionalen Formgegenstand 200 herzustellen und einen Teilbereich T des Formgegenstandes 200, mit einer fehlerbehafteten Schicht Sₓ, abzutragen. Der dreidimensionalen Formgegenstand 200 wird in Schichten Sₙ aufgetragen. Zu diesem Zweck weist die Vorrichtung 100 eine Materialabgabeeinrichtung 300 zum Aufbringen des Materials in Schichten Sₙ auf. Die erste Schicht Sₙ mit n=1 wird auf eine Druckunterlage 400 aufgebracht. Die Materialabgabeeinrichtung 300 ist eine Nivellierungseinrichtung 310 nachgeordnet, die verhindert, dass sich ein Materialüberschuss auf der aufgetragenen Schicht Sₙ bilden kann. Weiterhin weist die Vorrichtung 100 eine Materialabtrageeinrichtung 700 zum Abtragen eines Teilbereichs T des aufgebrachten Materials von der obersten Schicht S_{N} bis zu einer fehlerbehafteten Schicht Sₓ, mit x: {1, ..., N}, auf. Im Folgenden wird von der ersten auf die Druckunterlage 400 aufgebrachten Schicht Sₙ mit n=1 als unterste Schicht gesprochen. Die zuletzt aufgebrachte Schicht S_{N} wird als die oberste Schicht bezeichnet. Die oberste Schicht S_{N} kann die letzte Schicht sein, mit der der dreidimensionalen Formgegenstand 200 fertig gestellt wurde oder eine beliebige Schicht vor Fertigstellung des Formgegenstandes 200, bei der der Druckvorgang aufgrund einer Fehlerdetektion unterbrochen wird. Sowohl die Materialabgabeeinrichtung 300 als auch die Materialabtrageeinrichtung 700 werden von einer Steuereinrichtung 500 angesteuert. Die Steuereinrichtung 500 weist einen Datenspeicher 510 auf, in dem Bilddaten 210, wie in den folgenden Figuren dargestellt, des herzustellenden dreidimensionalen Formgegenstandes 200 abgelegt sind. Weiterhin steuert die Steuereinrichtung 500 eine Antriebseinrichtung 410 an, welche die Druckunterlage 400 und die Materialabgabeeinrichtung 300 relativ zueinander positioniert. In diesem ersten Ausführungsbeispiel positioniert die Antriebseinrichtung 410 die Druckunterlage 400 relativ zur Materialabgabeeinrichtung 300, der in vertikaler Richtung feststehend ausgebildet ist. Dies erfolgt derart, dass beim schichtweisen Materialauftrag in Schichten Sₙ die Druckunterlage 400 in vertikaler Richtung nach unten verfahren wird und beim schichtweisen Materialabtrag der Schichten S_{N} bis x die Druckunterlage 400 in vertikaler Richtung nach oben in Richtung Materialabtrageeinrichtung 700, die in diesem Ausführungsbeispiel ebenfalls in vertikaler Richtung feststehend ausgebildet ist, verfahren wird. Die Bewegungsrichtung der Druckunterlage 400, die durch die Antriebseinrichtung 410 bewirkt wird, ist mit vertikalen Doppelpfeilen symbolisiert.

Weiterhin weist die in Figur 1 dargestellte Vorrichtung 100 des ersten Ausführungsbeispiels eine Überwachungseinrichtung 600 auf, der eine Auswerteeinrichtung 610 nachgeordnet ist. Die Überwachungseinrichtung 600 überprüft den dreidimensionalen Formgegenstand 200 auf eventuell aufgetretene Fehler.

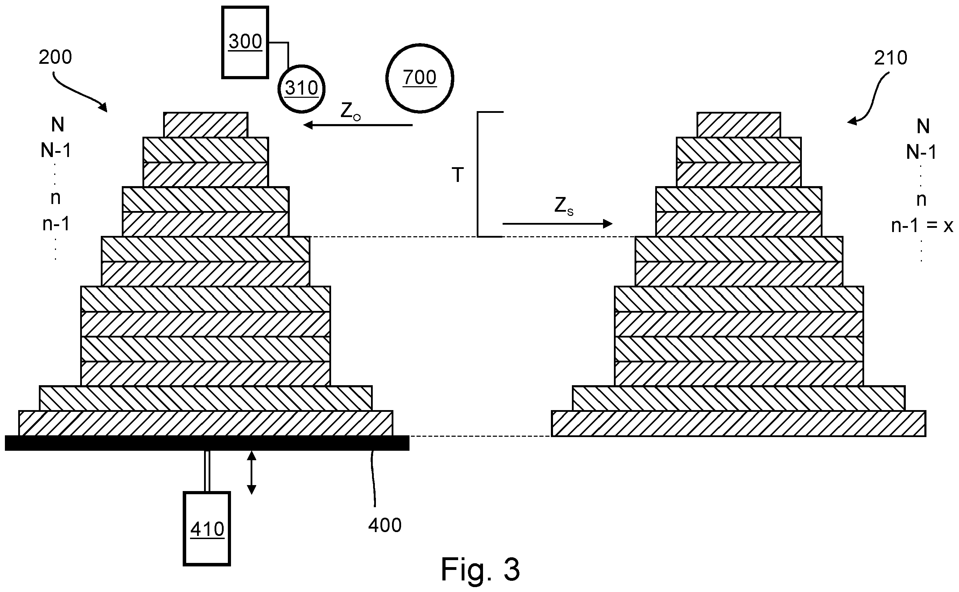

Um eine schadhafte, d.h. fehlerbehaftete Schicht Sₓ, die eventuell während des Druckprozesses in oder an dem dreidimensionalen Formgegenstand 200 entstehen kann, zu erfassen und zu korrigieren, wird der dreidimensionalen Formgegenstand 200 von der Überwachungseinrichtung 600 überprüft. Beispielsweise wird durch einen Vergleich des Formgegenstands 200, der aus mehreren Schichten Sₙ bis N gebildet wurde, mit den vorgegebenen Bilddaten des dreidimensionalen Formgegenstands 200, die in dem Datenspeicher 510 abgelegt sind, wird der Fehler erkannt. Die zwischen der Überwachungseinrichtung 600 und der Steuereinrichtung 500 angeordnete Auswerteeinrichtung 610, wertet den erfassten Fehler aus und ordnet dem von der Überwachungseinrichtung 600 festgestellten Fehler eine Schicht Sₓ mit x: {1, ..., N} zu. Die Auswerteeinrichtung 610 überprüft die nachfolgenden Schichten Sₙ mit (n =x+1, n=x+2 usw.) auf eine fehlerhafte Geometrieänderung des Formgegenstandes 200, die ein vorbestimmtes Maß überschreitet und erzeugt daraufhin ein Fehlersignal. Das erzeugte Fehlersignal für diese erste der fehlerbehafteten Schichten Sₓ wird an die Steuereinrichtung 500 weitergeleitet. Der Druckprozess wird von der Steuereinrichtung 500 gestoppt, weil in einer Schicht Sₙ ein Fehler aufgetreten ist, der Auswirkung auf die nachfolgenden Schichten hat und ein Rückbauverfahren zum Abtragen des Materials eines Teilbereiches T des zuvor gedruckten dreidimensionalen Formgegenstandes 200 wird eingeleitet. Dieses Rückbauverfahren wird in den Figuren 3 bis 8 beschrieben.

Bei alternativen Ausführungsformen können die Überwachungseinrichtung 600 und die Auswerteeinrichtung 610 durch Prüfpersonal ersetzt werden. Die erfindungsgemäße Vorrichtung 100 funktioniert ansonsten wie bei dem ersten und zweiten Ausführungsbeispiel. Das Prüfpersonal bzw. Überwachungspersonal erkennt den Fehler aufgrund des Fachwissens und gibt die Daten für diese erste der fehlerbehafteten Schichten Sₓ über ein Eingabeterminal ein, so dass die Steuereinrichtung 500 die eingegebenen Daten, wie oben beschrieben, weiterverarbeitet. Das Prüfpersonal kann dabei die Eingabe der Tiefe des abzutragenden Materials auch mittels Dicken-Angabe (Verfahrweg für den Fräser in Z-Achse) in Millimetern vornehmen und die Steuereinrichtung (500) rechnet aus wie viele Schichten in die angegebene Millimeter-Angabe passen und setzt den Slicer-Zeiger Zₛ auf die er-rechnete Position der Schicht Sₓ.

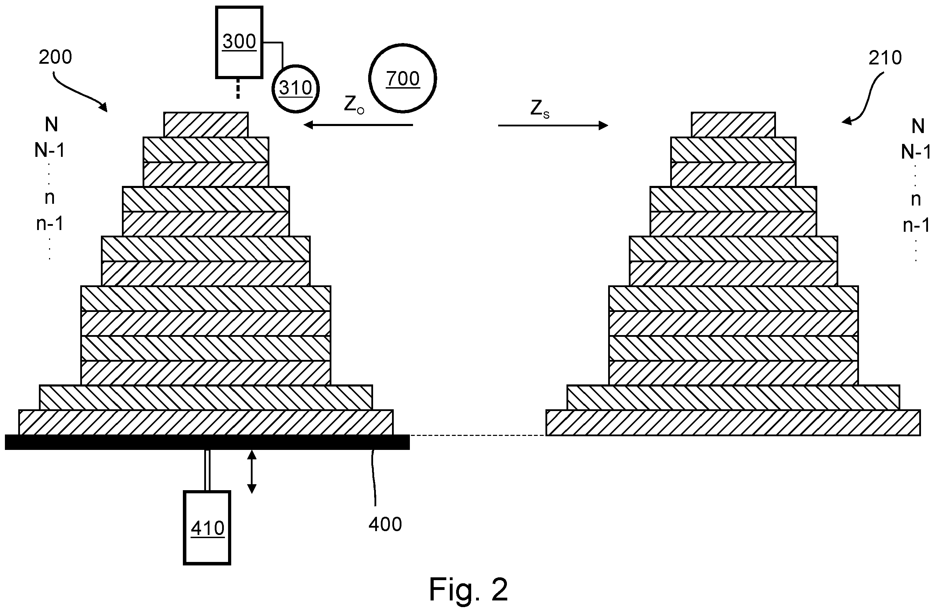

Figur 2 zeigt auf der linken Seite den dreidimensionalen Formgegenstand 200 und auf der rechten Seite die entsprechenden Bilddaten 210 des Formgegenstandes 200. Schematisch sind ein Objektzeiger Zₒ und ein Slicerzeiger Zₛ angedeutet. Der Slicerzeiger Zₛ erfasst die Schichtdaten einer Schicht Sₙ, die gemäß den Bilddaten 210 zu drucken ist. Der Objektzeiger Zₒ, der auf Druckerseite die jeweilige Schicht Sₙ entspricht, folgt dem Slicerzeiger Zₛ, um die Materialabgabeeinrichtung 300 entsprechend anzusteuern, bzw. zu positionieren. Damit werden die Schichten Sₙ des Formgegenstandes 200 entsprechend den Bilddaten 210 gedruckt. Ist eine Schicht Sₙ₋₁ vollständig gedruckt, so springt der Slicerzeiger Zₛ zu der nächsten zu druckenden Schicht Sₙ und der Objektzeiger Zₒ folgt, damit die Schicht Sₙ auf die Schicht Sₙ₋₁ aufgebracht wird. Dieser Prozess wird solange fortgesetzt bis der dreidimensionale Formgegenstand fertiggestellt ist, oder ein Fehler von der Überwachungseinrichtung 600 oder dem Prüfpersonal detektiert wird.

Figur 2 stellt einen fehlerfreien Druckprozess dar, bei dem der dreidimensionale Formgegenstand 200 fehlerfrei gedruckt wurde und alle Schichten Sₙ mit n=1 bis n=N korrekt aufgebaut wurden. Zum Aufbringen des Materials wurde die Druckunterlage 400 gemäß dem ersten Ausführungsbeispiel vertikal verfahren. Diese Darstellung und die Darstellungen des Formgegenstandes 200 sowie der Bilddaten 210 in den folgenden Figuren gelten entsprechend für das zweite

Ausführungsbeispiel und für die oben beschriebenen alternativen Ausführungsformen der erfindungsgemäßen Vorrichtung 100.

Ab Figur 3 wird davon ausgegangen, dass die Überwachungseinrichtung 600 oder das Überwachungs-/Prüfpersonal einen Fehler detektiert hat, der Auswirkung auf die nachfolgenden Schichten hat. Diesem Fehler wird mittels Auswerteeinrichtung 610 die entsprechende Schicht Sₙ zugeordnet. Beispielhaft wird angenommen, dass sich der Fehler in der Schicht Sₙ₋₁ des gedruckten Formgegenstandes 200 befindet. Der Druckprozess wird gestoppt. Der Slicerzeiger Zₛ der Bilddaten 210 wird auf die erste der fehlerhafte Schichten Sₓ, hier auf die beispielhaft gewählte Schicht Sₙ₋₁, gesetzt.

Sobald der Druckprozess gestoppt wird, weil in einer Schicht Sₙ ein Fehler aufgetreten ist, wird die Materialabgabeeinrichtung 300 in eine Parkposition verfahren und gibt die Arbeitsposition für die Materialabtrageeinrichtung 700 frei. Damit ist ein Rückbauverfahren zum Abtragen des Materials eines Teilbereiches T des zuvor gedruckten dreidimensionalen Formgegenstandes 200 eingeleitet.

Während sich die Materialabgabeeinrichtung 300 in der Parkposition befindet, wird sie von der Serviceeinrichtung auf eine Funktionsstörung überprüft. Die Wartung, die von der Serviceeinrichtung vorgenommen wird, beseitigt die Störung, so dass nach dem Abtragen der fehlerbehafteten Schichten, also nach dem Rückbauverfahren, wie im Folgenden beschrieben, die Materialabgabeeinrichtung 300 störungsfrei das Material schichtweise auftragen kann.

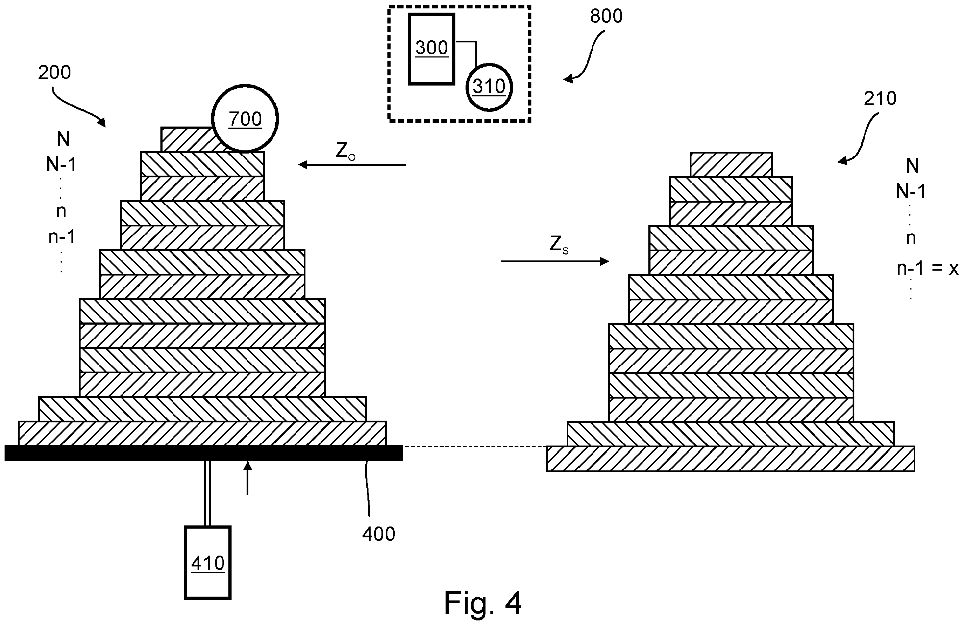

Dieses Rückbauverfahren wird anhand der Figuren 4 bis 8 beschrieben.

In Figur 4 befindet sich die Materialabtrageeinrichtung 700 bereits in der Arbeitsposition, um das Material des entsprechenden Teilbereichs T abzutragen. Der Teilbereich T umfasst in diesem Beispiel die Schichten n bis n-1. Der Objektzeiger Zₒ beinhaltet die Daten der jeweiligen Schicht, die abgetragen wird und folgt dem Slicerzeiger Zₛ. Ebenfalls können abhängig von den Eigenschaften der Materialabtrageeinrichtung 700 eine oder mehrere Schichten Sₙ in einem schichtweisen Bearbeitungsdurchgang des Rückbauverfahrens abgetragen werden. Beispielhaft ist in dieser und in den folgenden Figuren das Abtragen von jeweils einer Schicht Sₙ dargestellt.

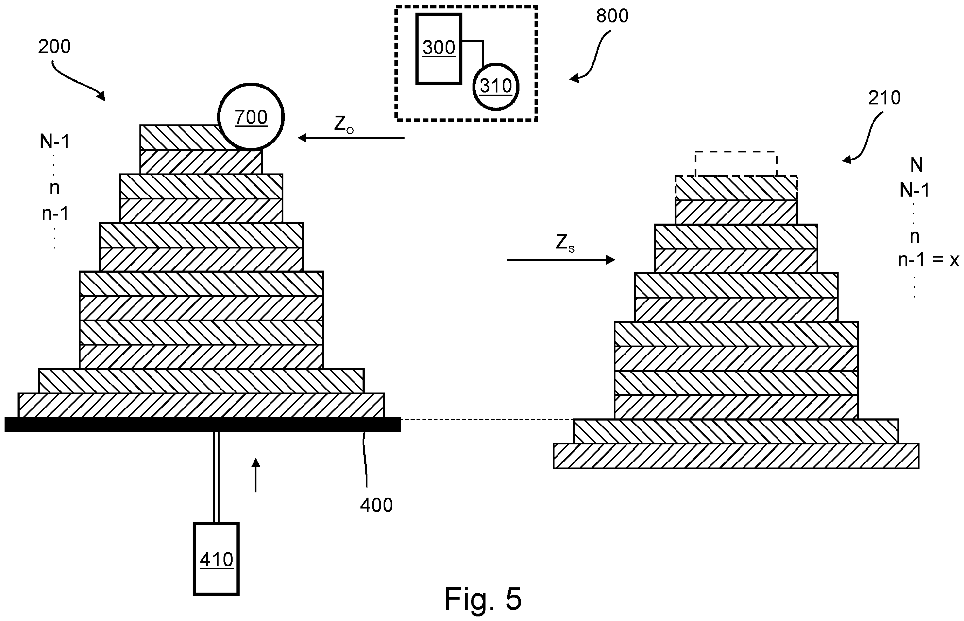

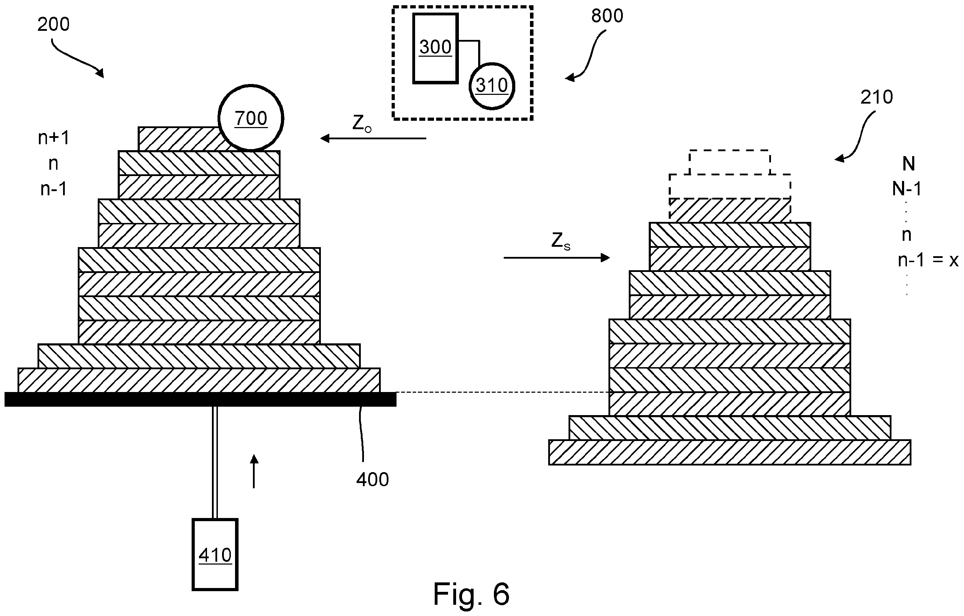

Gemäß Figur 5 folgt der Objektzeiger Zₒ weiterhin dem Slicerzeiger Zₛ, der solange auf der fehlerbehafteten Schicht n-1 steht, bis diese entfernt wird. Figur 5 zeigt das Rückbauverfahren für die Schicht N-1, da die Schicht N bereits abgetragen wurde. Hierfür wurde die Druckunterlage 400 von der Antriebseinrichtung 410 auf die Höhe der Materialabtrageeinrichtung 700 verfahren, also in diesem Beispiel eine Schichtdicke des gedruckten Formgegenstandes 200 vertikal nach oben, da hier beispielsweise jeweils eine Schichtdicke abgetragen wird. Analog zu Figur 5 wird in Figur 6 die Druckunterlage 400 von der Antriebseinrichtung 410 weiter vertikal nach oben verfahren, damit die nächste Schicht Sₙ₊₁ des Formgegenstandes 200 von der Materialabtrageeinrichtung 700 abgetragen werden kann. Die gestrichelten Schichten S_{N} und S_{N-1} der Bilddaten 210 auf der rechten Seite der Figur sagen aus, dass diese Schichten S bereits abgetragen wurden.

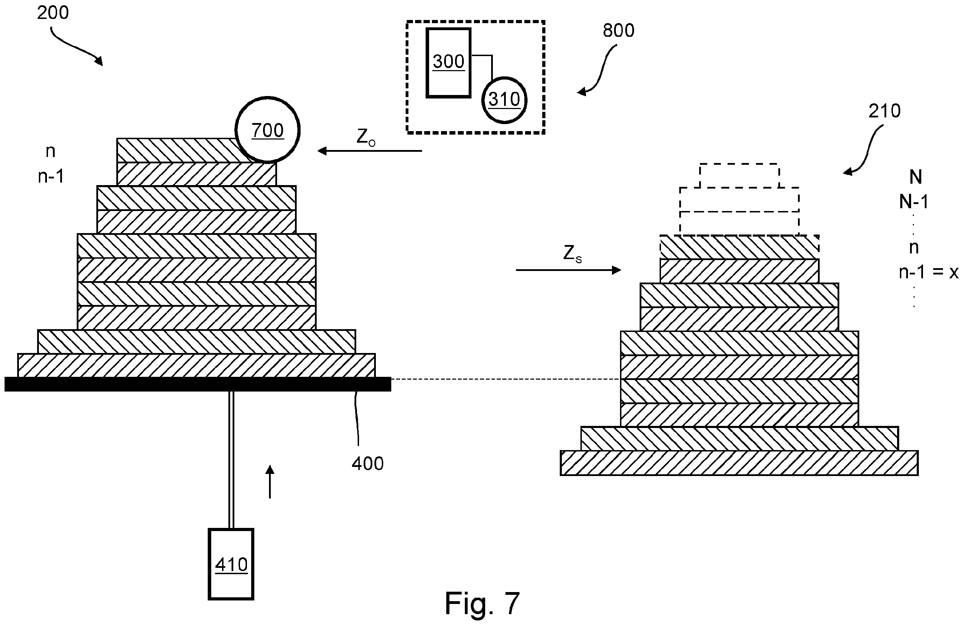

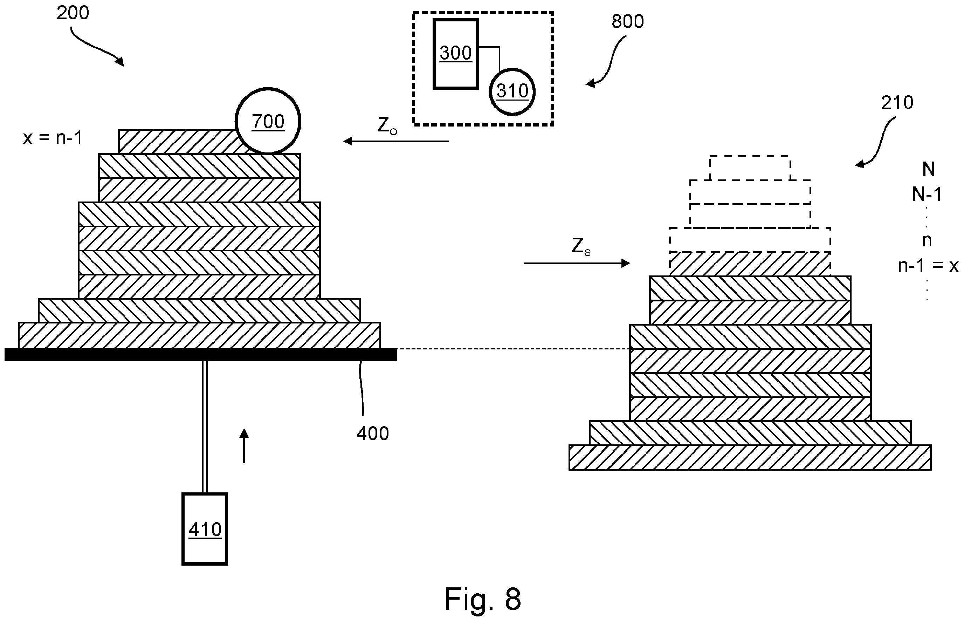

Das Rückbauverfahren wird nach dem oben beschriebenen Prozess weitergeführt, um die Schichten, einzeln oder mehrere, abzutragen. Dies wird in der Figur 7 für die Schicht n und in der Figur 8 für die Schicht x=n-1 schematisch dargestellt. Erst wenn der Objektzeiger Zₒ und der Slicerzeiger Zₛ wieder auf derselben Schicht, hier n-1, stehen, wird die Materialabtrageeinrichtung 700 gestoppt. Damit ist gewährleistet, dass alle Schichten bis zu der detektierten fehlerbehafteten Schicht Sₓ mit x=n-1 vollständig abgetragen wurden und das Rückbauverfahren ist beendet.

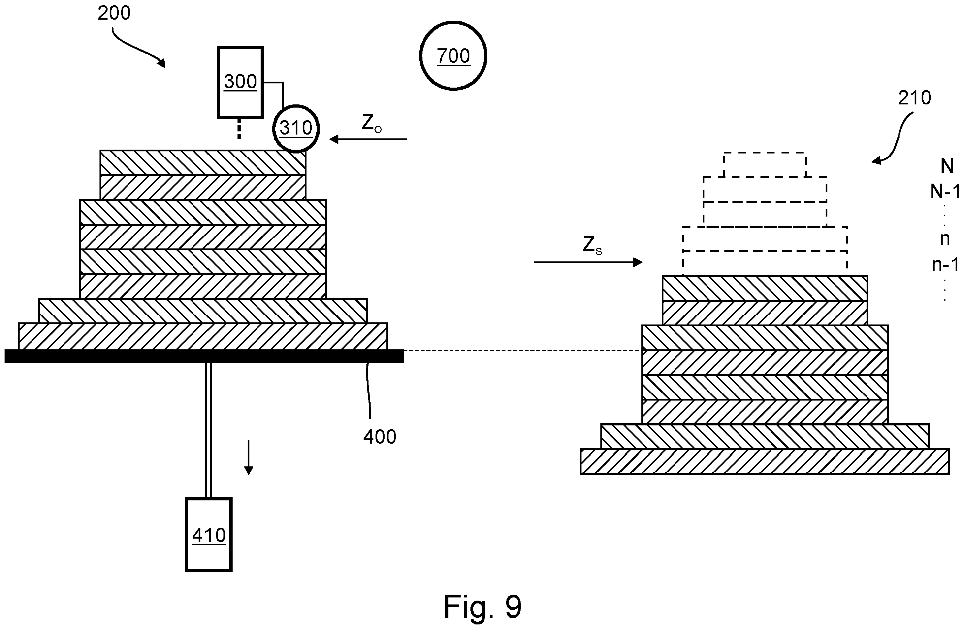

Die Materialabtrageeinrichtung 700 wird in eine Parkposition und die Materialabgabeeinrichtung 300 in die Arbeitsposition verfahren, wie in Figur 9 für das erste Ausführungsbeispiel dargestellt. Da der Formgegenstand 200 fehlerhaft war, muss nun der Druckprozess von neuem gestartet werden, um einen fehlerfreien Formgegenstand 200 herzustellen.

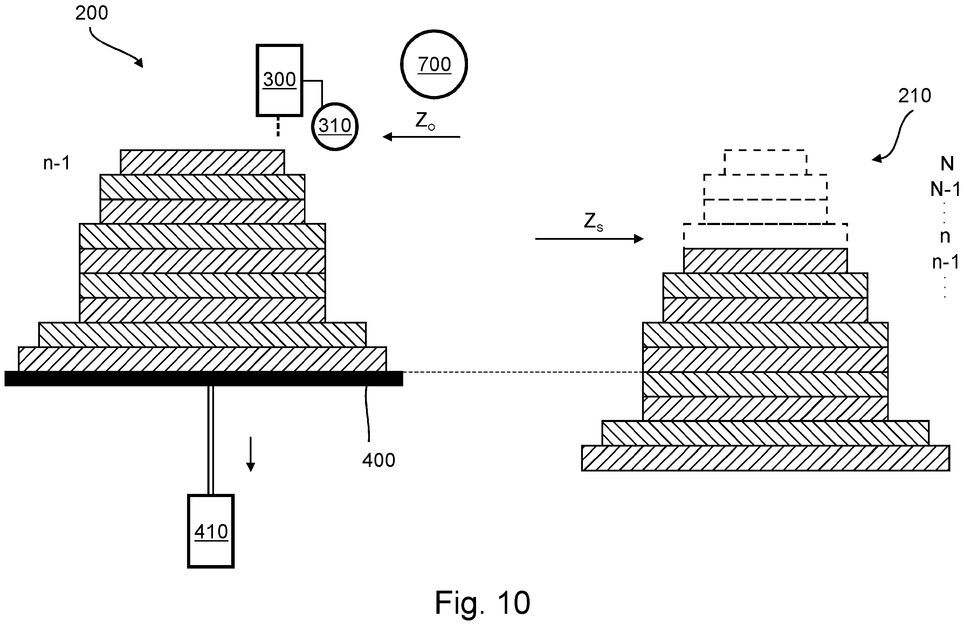

Figur 10 verdeutlicht den Druckvorgang anhand des ersten Ausführungsbeispiels. Wie jeweils in der linken Darstellung des dreidimensionalen Formgegenstandes 200 zu erkennen ist, wurde die zuvor erste der fehlerbehafteten Schichten Sₓ mit x=n-1 von der Materialabgabeeinrichtung 300 neu aufgetragen und von der Nivellierungseinrichtung 310 nivelliert, also geglättet. Dabei ist die Materialabtrageeinrichtung 700 angehoben oder bei Seite gefahren. Das Materialauftragungsverfahren wird solange weitergeführt, bis der Formgegenstand 200 vollständig fehlerfrei gedruckt ist. Der Materialauftrag erfolgt solange, bis der Objekt-Zeiger Zo die Position des Slicer-Zeiger Zs erreicht hat.

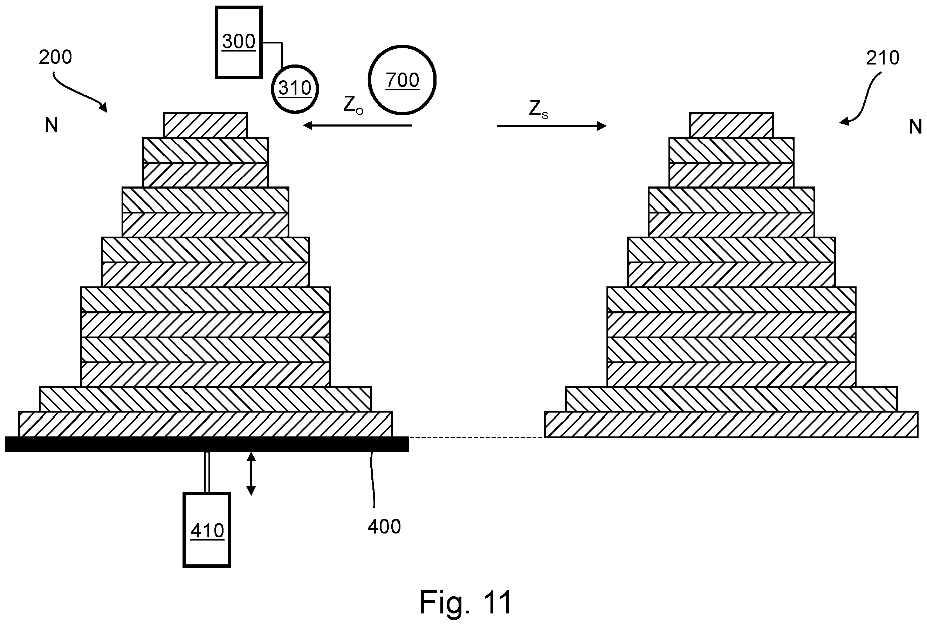

Figur 11 zeigt den Formgegenstand 200 nach dem erneuten Aufbringen der Schichten n=x bis N, also am Ende des neuen Druckvorgangs. Die Druckunterlage 400 ist von der Antriebseinrichtung 410 wieder in die Ausgangsposition verfahren und die oberste Schicht N ist vollständig aufgebracht. Die Materialabtrageeinrichtung 700 befindet sich in Parkposition. Hat die Ermittlung eines Fehlers noch vor der vollständigen Fertigstellung des Formgegenstands stattgefunden, dann kann (nach dem Abtragen geschädigten Schichten) der Druckprozess solange fortgesetzt werden bis der Formgegenstand vollständig fertiggestellt ist. Dabei werden die abgetragenen Schichten wieder aufgetragen.

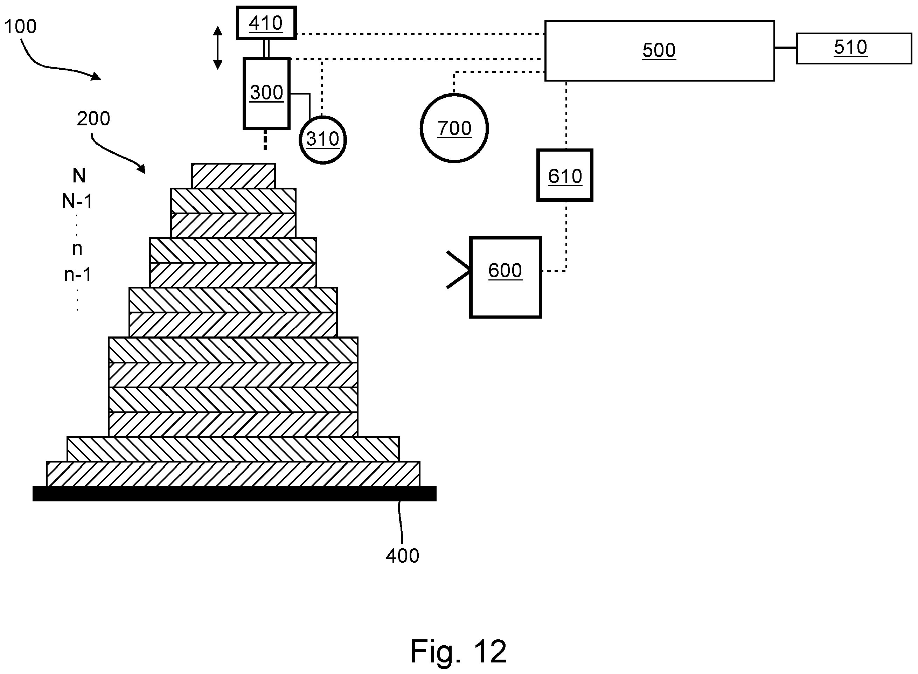

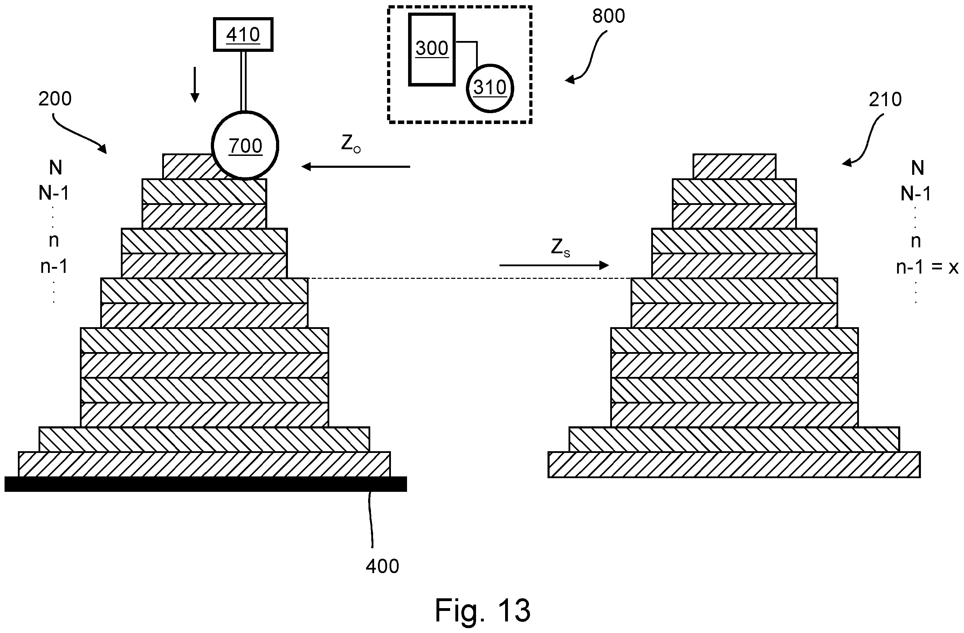

Figur 12 zeigt ein zweites Ausführungsbeispiel zum Positionieren von Druckunterlage 400 und Materialabgabeeinrichtung 300 relativ zueinander. Anders als in dem Ausführungsbeispiel nach Figur 1 ist die Antriebseinrichtung 410 in Figur 12 an der Materialabgabeeinrichtung 300 angeordnet, um diesen vertikal zu verfahren und die Druckunterlage 400 ist feststehend in vertikaler Richtung ausgebildet. Die Richtung der Bewegung der Materialabgabeeinrichtung 300, die durch die Antriebseinrichtung 410 bewirkt wird, ist mit vertikalen Doppelpfeilen symbolisiert. Bei diesem Ausführungsbeispiel wird die Materialabgabeeinrichtung 300 beim Auftragen des Materials in Schichten Sₙ auf die Druckunterlage 400 von der Antriebseinrichtung 410 vertikal nach oben bewegt, um den dreidimensionale Formgegenstand 200 herzustellen. Beim Materialabtrag verfährt die Antriebseinrichtung 410 die Materialabtrageeinrichtung 700 in vertikaler Richtung nach unten in Richtung Druckunterlage 400, wie in Figur 13 noch näher beschrieben wird. Ungeachtet der in dieser Figur gezeigten alternativen Anordnung der Antriebseinrichtung 410 funktioniert die Vorrichtung 100 genau wie mit Bezug auf Figur 1 beschrieben.

In Figur 13 wird der Beginn des Rückbauverfahrens für das zweite Ausführungsbeispiel dargestellt. Bei dem zweiten Ausführungsbeispiel wird ebenfalls davon ausgegangen, dass in der Schicht n-1 ein Fehler detektiert wurde, der Auswirkungen auf die auf die nachfolgenden Schichten hat und deshalb das Rückbauverfahren eingeleitet wird. Wie bereits erwähnt, wird die Materialabtrageeinrichtung 700 relativ zur Druckunterlagen 400, die in vertikaler Richtung feststehend ausgebildet ist, vertikal nach unten verfahren. Der Pfeil deutet die Richtung an, in die die Antriebseinrichtung 410 die Materialabtrageeinrichtung 700 schichtweise verfährt. Ungeachtet der in dieser Figur gezeigten alternativen Anordnung der Antriebseinrichtung 410 funktioniert das Rückbauverfahren genau wie mit Bezug auf die Figuren 5 bis 9 des ersten Ausführungsbeispiel oben beschrieben wurde.

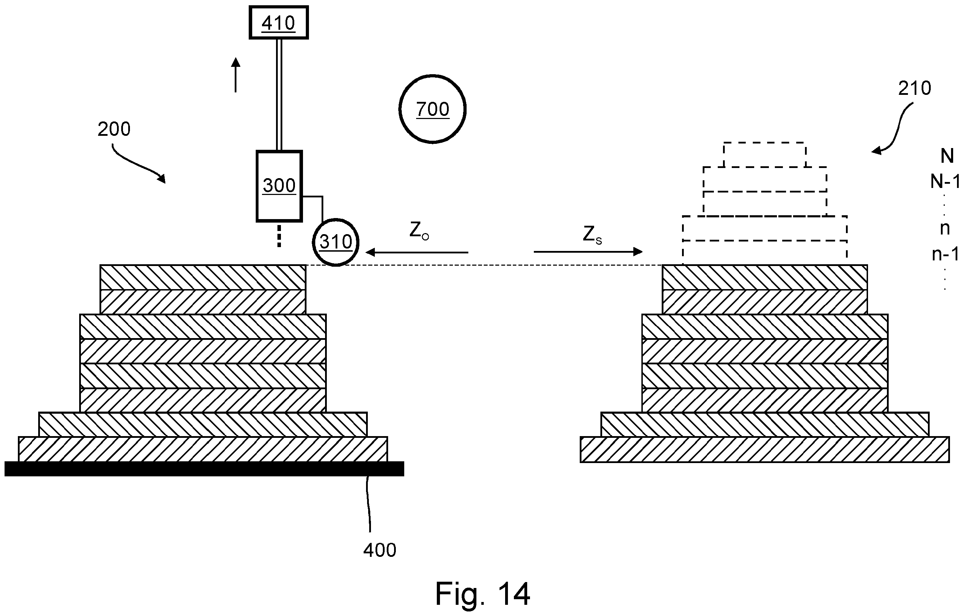

Figur 14 zeigt, wie sich die Materialabtrageeinrichtung 700 in einer Parkposition befindet, da der Materialabtrag mittels Rückbauverfahren abgeschlossen ist. Die Materialabgabeeinrichtung 300 wird in die Arbeitsposition verfahren. Da der Formgegenstand 200 fehlerhaft war, muss nun der Druckprozess von neuem gestartet werden, um einen fehlerfreien Formgegenstand 200 herzustellen. Dieser Materialauftrag beginn in der Schicht n-1, auf der der Slicer-Zeiger Zs und auch der Objektzeiger Zo stehen. Wie oben beschrieben erfolgt der Materialauftrag mittels Materialabgabeeinrichtung 300, die der Materialabgabeeinrichtung 300 folgende Nivelliereinrichtung 310 verhindert einen Materialüberschuss und der Formgegenstand 200 wird neu aufgebaut.

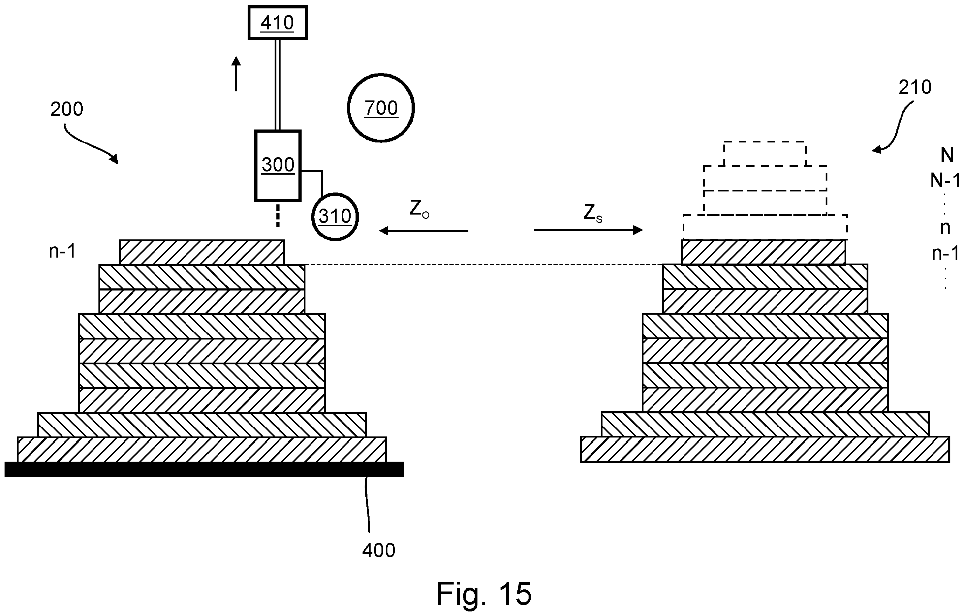

Figur 15 verdeutlicht den Druckvorgang, ausgehend von der Schicht n-1, die in dieser Ansicht bereits vollständig neu aufgebaut wurde. Die Materialabgabeeinrichtung 300 steht bereits auf der nächsten Schicht n, auf die der Slicer-Zeiger Zs in den Bilddaten und entsprechend der Objekt-Zeiger Zo gesetzt sind.

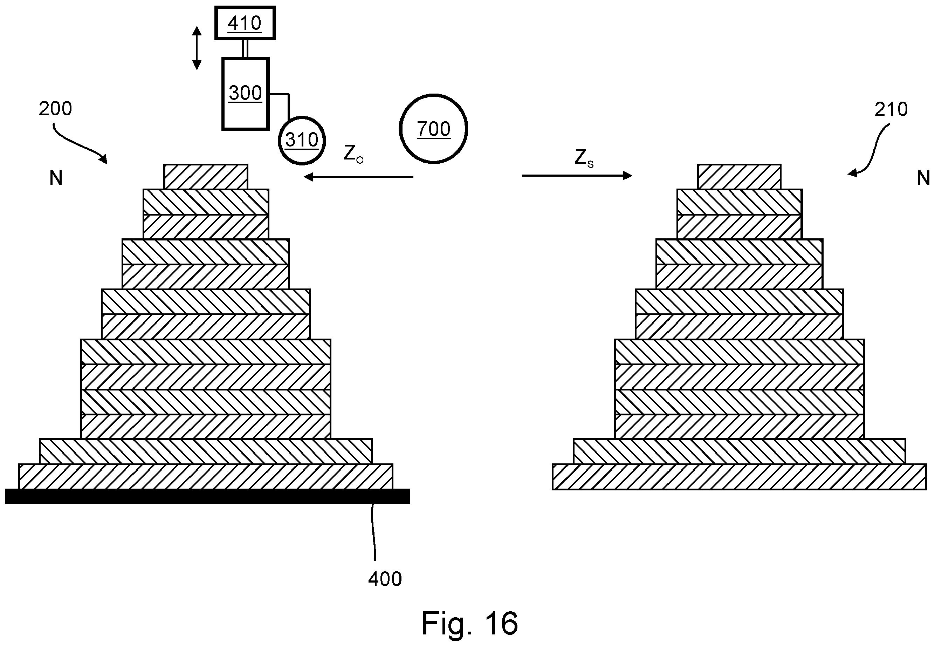

Wie jeweils in der linken Darstellung des dreidimensionalen Formgegenstandes 200 zu erkennen ist, wurde die zuvor fehlerbehaftete Schicht Sₓ mit x=n-1 von der Materialabgabeeinrichtung 300 neu aufgetragen. Das Materialauftragungsverfahren wird solange weitergeführt, bis der Formgegenstand 200 vollständig fehlerfrei gedruckt ist, dies ist in Figur 16 dargestellt. Analog zu Figur 11 des ersten Ausführungsbeispiels ist in diesem zweiten Ausführungsbeispiel die Materialabgabeeinrichtung 300 von der Antriebseinrichtung 410 wieder in die Ausgangsposition verfahren und die oberste Schicht N ist vollständig aufgebracht. Die Materialabtrageeinrichtung 700 befindet sich in Parkposition. Der Formgegenstand ist nach fehlerfreiem Materialauftrag fertiggestellt. Hat die Ermittlung eines Fehlers noch vor der vollständigen Fertigstellung des Formgegenstands stattgefunden, dann kann (nach dem Abtragen geschädigten Schichten) der Druckprozess solange fortgesetzt werden bis der Formgegenstand vollständig fertiggestellt ist. Dabei werden die abgetragenen Schichten wieder aufgetragen.

Die Materialabtrageeinrichtung 700 weist ein Materialabtragwerkzeug auf, das zum vollflächigen bzw. kompletten Abtragen von Schichten Sₓ des Formgegenstandes 200 geeignet ist. Dafür erstreckt sich das Materialabtragwerkzeug über die Druckbreite des zu druckenden Formgegenstandes, also es überspannt die Druckunterlage in seiner Druckbreite.

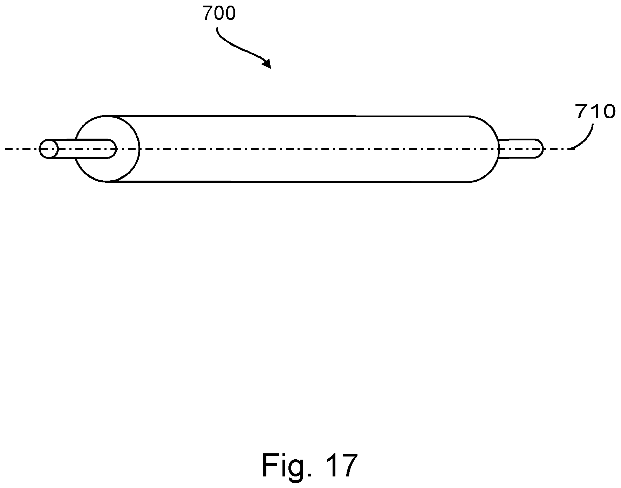

In den Figuren 17 bis 19 werden Ausführungsbeispiele der Materialabtrageeinrichtung 700 in ihrer perspektivischen Ansicht dargestellt, um zu veranschaulichen, dass die Materialabtrageeinrichtung 700 das Material einer oder mehrerer Schichten vollständig in einem Arbeitsgang abträgt.

Figur 17 zeigt eine Ausbildung des Materialabtragwerkzeug der Materialabtrageeinrichtung 700 in einer Längserstreckung entlang einer Achse 710. Nur beispielhaft ist hier eine Fräse dargestellt. Die Materialabtrageeinrichtung 700 kann mit ihrem Materialabtragwerkzeug auch als weitere übliche spanabhebende Werkzeuge ausgebildet sein, ohne um die Achse 710 zu rotieren. Das gilt insbesondere für flächig arbeitende, z.B. schleifende, erodierende oder polierende Materialabtragwerkzeuge. Das dargestellte längliche Materialabtragwerkzeug ist für ein kartesisches System geeignet, da der Materialabtrag vollflächig mit einem geringen Überstand über die Breite oder die Länge der Druckunterlage 400, auch Druckbreite genannt, auf der der Formgegenstand aufgebracht wird, gleichmäßig erfolgt. Beim Abtragen des Materials dreht sich das längliche Materialabtragwerkzeug der Materialabtrageeinrichtung 700 um seine Achse 710. Da das Rückbauverfahren unabhängig von der Fehlerart, dem lokalen Auftrittsort in einer Schicht und der Größe bzw. von der Dimension eines Fehlers erfolgt, wird das Material über die volle Fläche abgetragen. Zur Steigerung der Geschwindigkeit kann die Schicht nicht nur vollflächig, also komplett, abgetragen, sondern - wie schon in den anderen Figuren beschrieben - werden auch mehrere Schichten in diesem einen Arbeitsgang des Materialabtrags abgetragen. Somit lässt sich nicht nur die Produktivität, sondern auch die Qualität des herzustellenden dreidimensionalen Formgegenstandes 200 steigern, da die Reparatur nicht minimalistisch, sondern großflächig ausgeführt wird.

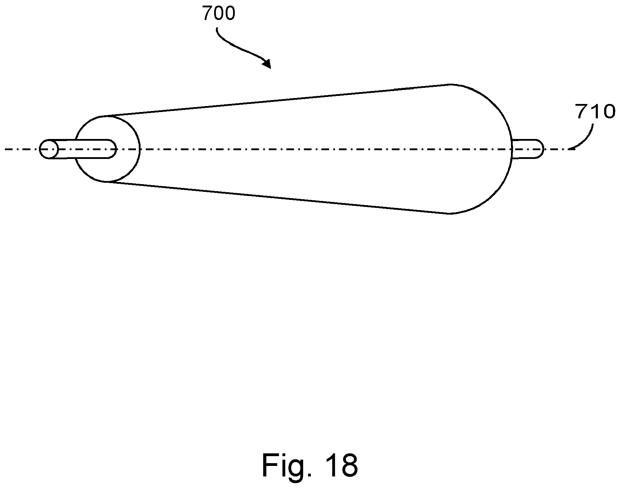

In Figur 18 ist das längliche Materialabtragwerkzeug der Materialabtrageeinrichtung 700 in einer konischen Ausführung dargestellt, und ebenfalls um seine Achse 710 drehbar gelagert. Das längliche Materialabtragwerkzeug kommt zur spanabhebenden Bearbeitung in einem polaren Drucksystem zum Einsatz. Beispielhaft ist auch in dieser Figur das Materialabtragwerkzeug drehbar dargestellt, wie es bei einem Abfräsen der fehlerhaften Schichten verwendet wird. Das Materialabtragwerkzeug kann zum spanabhebenden Materialabtrag entlang seiner Achse 710 auch feststehend ausgebildet sein.

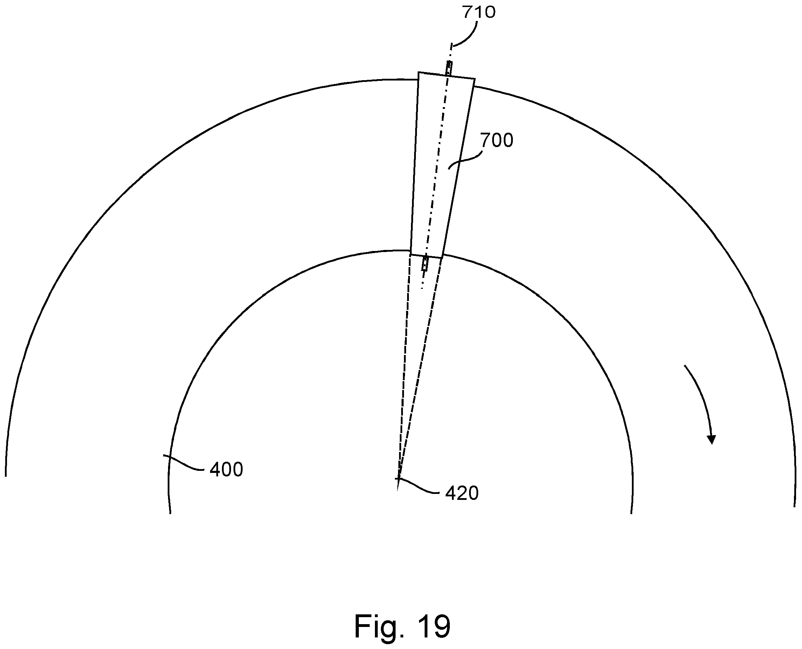

Figur 19 zeigt in einer Draufsicht die Materialabtrageeinrichtung 700 für das Ausführungsbeispiel nach Figur 18. In dieser Darstellung ist erkennbar, wie sich die Materialabtrageeinrichtung 700 über die gesamte Breite des zu druckenden Bereichs erstreckt, analog dem kartesischen System nach Figur 17. In Figur 19 wird als Druckbereich ein ringförmiges Druckfeld einer rotierenden Druckunterlage 400 gezeigt. Die Materialabtrageeinrichtung 700 erstreckt sich jeweils seitlich über den bedruckbaren Bereich hinaus, um in einem Arbeitsgang vollflächig einen Materialabtrag vorzunehmen. Die Druckunterlage 400 ist rotationssymmetrisch zu einer Drehachse 420 angeordnet.

### Bezugszeichenliste

- 100: Vorrichtung
- 200: Formgegenstand
- 210: Bilddaten des Formgegenstandes
- 300: Materialabgabeeinrichtung
- 310: Nivellierungseinrichtung
- 400: Druckunterlage
- 410: Antriebseinrichtung
- 420: Drehachse
- 500: Steuereinrichtung
- 510: Datenspeicher
- 600: Überwachungseinrichtung
- 610: Auswerteeinrichtung
- 700: Materialabtrageeinrichtung
- 710: Achse
- 800: Servicestation
- T: Teilbereich
- S: Schicht
- n: n: {1 bis N} mit n = ganze positive Zahl
- N: letzte gedruckte Schicht
- x: fehlerbehaftete Schicht x: {1, ..., N}
- Zₒ: Objektzeiger
- Zₛ: Slicerzeiger

## Patentansprüche

1. Vorrichtung (100) zum Herstellen eines dreidimensionalen Formgegenstandes (200) mittels Materialauftrag in Schichten Sₙ mit n=1 bis N, aufweisend:
- mindestens eine Materialabgabeeinrichtung (300) zum Aufbringen von physikalisch oder chemisch verfestigbarem Material auf eine Druckunterlage (400) oder eine darauf befindliche, verfestigte Schicht Sₙ des Formgegenstandes (200);
- eine Antriebseinrichtung (410) zum Positionieren von Druckunterlage (400) und der mindestens einen Materialabgabeeinrichtung (300) relativ zueinander;
- eine Steuereinrichtung (500) mit einem Datenspeicher (510), zum Ablegen von Bilddaten (210) des dreidimensionalen Formgegenstandes (200), wobei die Steuereinrichtung (500) mit der Antriebseinrichtung (410) und der mindestens einen Materialabgabeeinrichtung (300) in Steuerverbindung steht;
- eine Überwachungseinrichtung (600) zum Überprüfen der Schichten Sₙ des dreidimensionalen Formgegenstandes (200), wobei der Überwachungseinrichtung (600) eine Auswerteeinrichtung (610) nachgeordnet ist;
- eine Materialabtrageeinrichtung (700), wobei die Auswerteeinrichtung (610) und die Materialabtrageeinrichtung (700) in Steuerverbindung mit der Steuereinrichtung (500) stehen und der Materialabgabeeinrichtung (300) eine Nivellierungseinrichtung (310) zum Nivellieren der jeweils aufgebrachten Schicht Sₙ nachgeordnet ist,
**dadurch gekennzeichnet, dass**
die Auswerteeinrichtung (610) zum Feststellen einer Schicht Sₙ mit n=x, in welcher mindestens ein Fehler von der Überwachungseinrichtung (600) erfasst wurde, zum Überprüfen der nach der fehlerbehafteten Schicht Sₓ nachfolgenden Schichten Sₙ mit n=x+1, x+2... auf eine fehlerhafte Geometrieänderung des Formgegenstandes (200), die ein vorbestimmtes Maß überschreitet, zum Erzeugen eines Fehlersignals für die Schicht Sₓ bei fehlerhafter Geometrieänderung der nachfolgenden Schichten Sₙ mit n=x+1, x+2... und zum Weiterleiten des erzeugten Fehlersignals für diese erste der fehlerbehafteten Schichten Sₓ an die Steuereinrichtung (500) ausgebildet ist; dass die Materialabtrageeinrichtung (700) zum Abtragen des Materials eines Teilbereiches (T) des dreidimensionalen Formgegenstands (200) von der zuletzt gedruckten Schicht S_{N} bis zu der ersten der fehlerbehafteten Schichten Sₓ, für die ein Fehlersignal erzeugt wurde, ausgestaltet ist, wobei die Materialabtrageeinrichtung (700) derart ausgebildet ist, dass beim Abtragen des Materials vollständige Schichten Sₙ abtragbar sind.

2. Vorrichtung (100) nach Anspruch 1, **dadurch gekennzeichnet, dass** der Teilbereich (T) des dreidimensionalen Formgegenstands (200) von der zuletzt gedruckten Schicht S_{N} bis zu der fehlerbehafteten Schicht Sₓ mindestens eine vorzugsweise komplette Schicht Sₙ, insbesondere zwischen zwei und vier vorzugsweise komplette Schichten Sₙ, bevorzugt mehr als vier vorzugsweise komplette Schichten Sₙ, umfasst.

3. Vorrichtung (100) nach einem der vorangegangenen Ansprüche, **dadurch gekennzeichnet, dass** die Materialabtrageeinrichtung (700) zu einer spanabhebenden Bearbeitung ausgebildet ist, insbesondere mittels Fräsen, Schleifen, vorzugsweise polieren und/oder Schaben.

4. Vorrichtung (100) nach einem der vorangegangenen Ansprüche, **dadurch gekennzeichnet, dass** die Materialabtrageeinrichtung (700) derart ausgebildet ist, dass beim Abtragen des Materials die Dicke einer Schicht Sₙ oder die Dicke mindestens zweier Schichten Sₙ vorzugsweise komplett abtragbar ist.

5. Vorrichtung (100) nach Anspruch 1, **dadurch gekennzeichnet, dass** die Überwachungseinrichtung (600) als optische Überwachungseinrichtung, insbesondere eine CCD-Kamera, eine CCD-Kamera in Kombination mit Laserstrahl, eine optische oder mechanische Abtasteinrichtung, eine schichtdickenmessende Einrichtung oder ein Mess-Laser ausgebildet ist.

6. Vorrichtung (100) nach einem der vorangegangenen Ansprüche, **dadurch gekennzeichnet, dass** die Materialabgabeeinrichtung (300) derart ausgebildet ist, dass sie in eine Parkposition bringbar ist, an der eine Servicestation (800) zum Überprüfen einer Funktionsstörung der Materialabgabeeinrichtung (300) und zum Beseitigen der eventuellen Funktionsstörung angeordnet ist.

7. Vorrichtung (100) nach einem der vorangegangenen Ansprüche, **dadurch gekennzeichnet, dass** die Druckunterlage (400) um eine Rotationsachse drehbar zu der mindestens einen Materialabgabeeinrichtung (300) gelagert ist.

8. Vorrichtung (100) nach einem der vorangegangenen Ansprüche, **dadurch gekennzeichnet, dass** die Antriebseinrichtung (410) zum Positionieren der Materialabgabeeinrichtung (300) relativ zur Druckunterlage (400), die in vertikaler Richtung feststeht oder zum Positionieren der Druckunterlage (400) relativ zu der Materialabgabeeinrichtung (300), die in vertikaler Richtung feststeht, ausgebildet ist.

9. Vorrichtung (100) nach einem der Ansprüche 1 bis 8, **dadurch gekennzeichnet, dass** die Materialabtrageeinrichtung (700) ein Materialabtragwerkzeug zum spanabhebenden Bearbeiten des Formgegenstandes (200) aufweist, wobei das Materialabtragwerkzeug die Druckunterlage (400) in mindestens einer Erstreckung derart überspannt, dass die Materialabtrageeinrichtung (700) die Schichten S_{N} bis Sₓ komplett abträgt.

10. Vorrichtung (100) nach Anspruch 9, **dadurch gekennzeichnet, dass** Materialabtrageeinrichtung (700) und Druckunterlage (400) relativ zueinander um eine Höhe verfahrbar sind, wobei die Höhe nach Maßgabe des abzutragenden Teilbereichs (T) der fehlerbehafteten Schichten S_{N} bis Sₓ des Formgegenstandes (200) von der Auswerteeinrichtung (610) vorgegeben ist und dass das Materialabtragwerkzeug die kompletten Schichten S_{N} bis Sₓ in einem Arbeitsschritt abträgt.

11. Vorrichtung (100) nach einem der Ansprüche 9 oder 10, **dadurch gekennzeichnet, dass** das Materialabtragwerkzeug der Materialabtrageeinrichtung (700) eine Längserstreckung entlang einer Achse (710) aufweist, um seine Achse (710) drehbar ist und zylindrisch oder konisch ausgebildet ist.

12. Verfahren zum Herstellen eines dreidimensionalen Formgegenstandes (200) mittels Materialauftrag in Schichten Sₙ mit n = 1 bis N, aufweisend folgende Schritte:
- Aufbringen von physikalisch oder chemisch verfestigbarem Material in Schichten Sₙ auf eine Druckunterlage (400);
- Überprüfen des dreidimensionalen Formgegenstandes (200) im Hinblick auf mindestens einen vorhandenen Fehler,
- Nivellieren jeder jeweils aufgebrachten Schicht Sₙ;
- Feststellen einer Schicht Sₓ des dreidimensionalen Formgegenstandes (200), in welcher der mindestens eine Fehler erfasst wurde;
- Überprüfen der nachfolgenden Schichten Sₙ mit n=x+1 , x+2... auf fehlerhafte Geometrieänderungen des Formgegenstandes (200);
**dadurch gekennzeichnet, dass**
- ein Fehlersignal für diese erste der fehlerbehafteten Schichten Sₓ erzeugt und an eine Steuereinrichtung (500) weitergeleitet wird, falls eine fehlerhafte Geometrieänderung der nachfolgenden Schichten Sₙ mit n=x+1, x+2... erfasst wurde, die ein vorbestimmtes Maß überschreitet;
- Stoppen des Materialauftragens in Schicht S_{N} nach Maßgabe des Fehlersignals;
- in den Bilddaten (210) des Formgegenstandes (200) ein Slicer-Zeiger (Zs) auf die erste fehlerhafte Schicht Sₓ gesetzt wird;
- ein Teilbereich (T) des dreidimensionalen Formgegenstands (200) von der zuletzt gedruckten Schicht S_{N} bis zu der fehlerbehafteten Schicht Sₓ, für die ein Fehlersignal erzeugt wurde, abgetragen wird, wobei die Schichten S_{N} bis Schicht Sₓ vollständig abgetragen werden und
- danach die zuvor abgetragenen Schichten und eventuelle weitere Schichten bis zur Fertigstellung des Formgegenstands schichtweise aufgetragen und überprüft werden.

13. Verfahren nach Anspruch 12, **dadurch gekennzeichnet, dass** der Teilbereich (T) des dreidimensionalen Formgegenstands (200) von der zuletzt gedruckten Schicht S_{N} bis zu der fehlerbehafteten Schicht Sₓ mindestens eine vorzugsweise komplette Schicht Sₙ, insbesondere zwischen zwei und vier vorzugsweise komplette Schichten Sₙ, bevorzugt mehr als vier vorzugsweise komplette Schichten Sₙ, umfasst.

14. Verfahren nach einem der Ansprüche 12 oder 13, **dadurch gekennzeichnet, dass** die Schichten Sₙ spanabhebend abgetragen werden, insbesondere durch fräsen, vorzugsweise polieren, schleifen und/oder schaben.

15. Verfahren nach einem der Ansprüche 12 bis 14, **dadurch gekennzeichnet, dass** beim Abtragen des Materials die Dicke einer Schicht Sₙ oder die Dicke mindestens zweier Schichten Sₙ vorzugsweise komplett abgetragen wird.

16. Verfahren nach einem der Ansprüche 12 bis 15 **dadurch gekennzeichnet, dass** die Druckunterlage (400) um eine Rotationsachse (420) gedreht wird.

17. Verfahren nach einem der Ansprüche 12 bis 16, **dadurch gekennzeichnet, dass** eine Materialabgabeeinrichtung (300) relativ zu der Druckunterlage (400), die in vertikaler Richtung feststeht oder die Druckunterlage (400) relativ zur Materialabgabeeinrichtung (300), die in vertikaler Richtung feststeht, durch eine Antriebseinrichtung (410) positioniert wird.

18. Verfahren nach einem der Ansprüche 12 bis 17, **dadurch gekennzeichnet, dass** ein Objekt-Zeiger (Zₒ) dem Slicer-Zeiger (Zₛ) folgt, bis die erste fehlerbehaftete Schicht Sₓ erreicht ist.

19. Verfahren nach einem der Ansprüche 12 bis 18, **dadurch gekennzeichnet, dass** die Schichten mittels einer Materialabgabeeinrichtung (300) auf die Druckunterlage (400) oder die darauf befindliche, verfestigte Schicht des Formgegenstandes (200) aufgebracht werden, und dass zwischen dem Erzeugen des Fehlersignals und dem anschließenden Auftragen einer neuen Schicht Sₙ die Materialabgabeeinrichtung (300) auf eine Funktionsstörung überprüft und - falls dabei eine Funktionsstörung detektiert wird - diese beseitigt wird.

20. Verfahren nach einem der Ansprüche 12 bis 19, **dadurch gekennzeichnet, dass** die Schichten S_{N} bis Schicht Sₓ in einem Arbeitsgang komplett abgetragen werden.

## Claims

1. Apparatus (100) for manufacturing a three-dimensional moulded article (200) by means of material application in layers Sₙ with n=1 to N, having
- at least one material dispensing device (300) for applying material that can be solidified physically or chemically to a printing substrate (400) or a solidified layer Sₙ of the moulded article (200) located thereon;
- a drive device (410) for positioning the printing substrate (400) and the at least one material dispensing device (300) relative to each other;
- a control device (500) having a data memory (510), for storing image data (210) of the three-dimensional moulded article (200), wherein the control device (500) has a control connection to the drive device (410) and the at least one material dispensing device (300);
- a monitoring device (600) for checking the layers Sₙ of the three-dimensional moulded article (200), wherein an evaluation device (610) follows the monitoring device (600);
- a material removal device (700), wherein the evaluation device (610) and the material removal device (700) have a control connection to the control device (500), and the material dispensing device (300) is followed by a levelling device (310) for levelling the respectively applied layer Sₙ,
**characterized in that**
the evaluation device (610) is designed to determine a layer Sₙ with n=x in which at least one defect has been detected by the monitoring device (600), to check the layers Sₙ following the defective layer Sₓ with n=x+1, x+2... for a defective geometry change of the moulded article (200) which exceeds a predetermined dimension, to generate an error signal for the layer Sₓ with a defective geometry change of the following layers Sn with n=x+1, x+2... and to forward the error signal generated for this first of the defective layers Sₓ to the control device (500); **in that** the material removal device (700) is configured to remove the material of a subregion (T) of the three-dimensional moulded article (200) from the last printed layer S_{N} as far as the first of the defective layers Sₓ for which an error signal has been generated, wherein the material removal device (700) is designed in such a way that, during the removal of the material, complete layers Sₙ can be removed.

2. Apparatus (100) according to Claim 1, **characterized in that** the subregion (T) of the three-dimensional moulded article (200) of the last printed layer S_{N} as far as the defective layer Sₓ comprises at least one preferably complete layer Sₙ, in particular between two and four preferably complete layers Sₙ, preferably more than four preferably complete layers Sₙ.

3. Apparatus (100) according to one of the preceding claims, **characterized in that** the material removal device (700) is designed for material-removing processing, in particular by means of milling, grinding, preferably polishing and/or scraping.

4. Apparatus (100) according to one of the preceding claims, **characterized in that** the material removal device (700) is designed in such a way that, during the removal of the material, the thickness of a layer Sₙ or the thickness of at least two layers Sₙ is preferably completely removable.

5. Apparatus (100) according to Claim 1, **characterized in that** the monitoring device (600) is designed as an optical monitoring device, in particular a CCD camera, a CCD camera in combination with a laser beam, an optical or mechanical sensing device, a device measuring layer thickness or a measuring laser.

6. Apparatus (100) according to one of the preceding claims, **characterized in that** the material dispensing device (300) is designed in such a way that it can be moved into a parking position, in which there is arranged a service station (800) for checking a functional problem of the material dispensing device (300) and for correcting the possible functional problem.

7. Apparatus (100) according to one of the preceding claims, **characterized in that** the printing substrate (400) is mounted such that it can rotate about an axis of rotation relative to the at least one material dispensing device (300).

8. Apparatus (100) according to one of the preceding claims, **characterized in that** the drive device (410) is designed to position the material dispensing device (300) relative to the printing substrate (400), which is fixed in the vertical direction, or to position the printing substrate (400) relative to the material dispensing device (300), which is fixed in the vertical direction.

9. Apparatus (100) according to one of Claims 1 to 8, **characterized in that** the material removal device (700) has a material removal tool for the material-removing processing of the moulded article (200), wherein the material removal tool spans the printing substrate (400) in at least one extent in such a way that the material removal device (700) removes the layers S_{N} to Sₓ completely.

10. Apparatus (100) according to Claim 9, **characterized in that** the material removal device (700) and the printing substrate (400) can be moved relative to each other by a height, the height being predefined by the evaluation device (610) according to the subregion (T) of the defective layers S_{N} to Sₓ of the moulded article (200) that is to be removed, and **in that** the material removal tool removes the complete layers S_{N} to Sₓ in one operation.

11. Apparatus (100) according to either of Claims 9 and 10, **characterized in that** the material removal tool of the material removal device (700) has a longitudinal extent along an axis (710), is rotatable about its axis (710) and is cylindrical or conical.

12. Method for manufacturing a three-dimensional moulded article (200) by means of material application in layers Sₙ with n=1 to N, having the following steps:
- applying material that can be solidified physically or chemically in layers Sₙ to a printing substrate (400) ;
- checking the three-dimensional moulded article (200) with regard to at least one defect that is present,
- levelling each respectively applied layer Sₙ;
- determining a layer Sₓ of the three-dimensional moulded article (200) in which the at least one defect has been detected;
- checking the following layers Sₙ with n=x+1, x=2... for defective geometry changes of the moulded article (200);
**characterized in that**
- an error signal is generated for this first of the defective layers Sₓ and is forwarded to a control device (500) if a defective geometry change of the following layers Sₙ with n=x+1, x+2... which exceeds a predetermined dimension has been detected;
- stopping the material application to the layer S_{N} in accordance with the error signal;
- a slicer pointer (Zs) to the first defective layer Sₓ is set in the image data (210) of the moulded article (200);
- a subregion (T) of the three-dimensional moulded article (200) is removed from the last printed layer S_{N} as far as the defective layer Sₓ for which an error signal has been generated, wherein the layers S_{N} to layer Sₓ are removed completely, and
- after that, the previously removed layers and possible further layers are applied and checked layer by layer until the moulded article has been completed.

13. Method according to Claim 12, **characterized in that** the subregion (T) of the three-dimensional moulded article (200) from the last printed layer S_{N} as far as the defective layer Sₓ comprises at least one preferably complete layer Sₙ, in particular between two and four preferably complete layers Sₙ, preferably more than four preferably complete layers Sₙ.

14. Method according to either of Claims 12 and 13, **characterized in that** the layers Sₙ are removed by removing material, in particular by milling, preferably polishing, grinding and/or scraping.

15. Method according to one of Claims 12 to 14, **characterized in that**, during the removal of the material, the thickness of one layer Sₙ or the thickness of at least two layers Sₙ is preferably removed completely.

16. Method according to one of Claims 12 to 15, **characterized in that** the printing substrate (400) is rotated about an axis of rotation (420).

17. Method according to one of Claims 12 to 16, **characterized in that** a material dispensing device (300) is positioned relative to the printing substrate (400), which is fixed in the vertical direction, or the printing substrate (400) is positioned relative to the material dispensing device (300), which is fixed in the vertical direction, by a drive device (410).

18. Method according to one of Claims 12 to 17, **characterized in that** an object pointer (Zₒ) follows the slicer pointer (Zₛ) until the first defective layer Sₓ is reached.

19. Method according to one of Claims 12 to 18, **characterized in that** the layers are applied by means of a material dispensing device (300) to the printing substrate (400) or to the solidified layer of the moulded article (200) that is located thereon, and **in that**, between the generation of the error signal and the subsequent application of a new layer Sₙ, the material dispensing device (300) is checked for a functional problem and - if a functional problem is detected - this is corrected.

20. Method according to one of Claims 12 to 19, **characterized in that** the layers S_{N} to layer Sₓ are removed completely in one operation.

## Revendications

1. Dispositif (100) permettant de fabriquer un article moulé tridimensionnel (200) au moyen d'une application de matériau par couches Sₙ, où n = 1 à N, présentant :
- au moins un équipement de distribution de matériau (300) pour appliquer un matériau, qui peut être solidifié de manière physique ou chimique, sur un substrat d'impression (400) ou une couche Sₙ solidifiée, qui se trouve sur celui-ci ou celle-ci, de l'objet moulé (200) ;
- un équipement d'entraînement (410) pour positionner le substrat d'impression (400) et ledit au moins un équipement de distribution de matériau (300) l'un par rapport à l'autre ;
- un équipement de commande (500) pourvu d'une mémoire de données (510) pour mémoriser des données d'image (210) de l'article moulé tridimensionnel (200), dans lequel l'équipement de commande (500) est en communication de commande avec l'équipement d'entraînement (410) et ledit au moins un équipement de distribution de matériau (300) ;
- un équipement de surveillance (600) pour contrôler les couches Sₙ de l'article moulé tridimensionnel (200), dans lequel un équipement d'évaluation (610) est placé en aval de l'équipement de surveillance (600) ;
- un équipement d'enlèvement de matériau (700), dans lequel l'équipement d'évaluation (610) et l'équipement d'enlèvement de matériau (700) sont en communication de commande avec l'équipement de commande (500), et un équipement de nivellement (310) pour niveler la couche Sₙ respectivement appliquée est placé en aval de l'équipement de distribution de matériau (300),
**caractérisé en ce que** l'équipement d'évaluation (610) est réalisé pour constater une couche Sₙ, où n = x, dans laquelle au moins un défaut a été détecté par l'équipement de surveillance (600), pour contrôler les couches Sₙ, où n = x+1, x+2, ..., suivant la couche défectueuse Sₓ quant à une variation de géométrie défectueuse de l'objet moulé (200) qui dépasse une mesure prédéterminée, pour générer un signal d'erreur pour la couche Sₓ en cas de variation de géométrie défectueuse des couches Sₙ suivantes, où x = x+1, x+2, ..., et pour retransmettre le signal d'erreur généré pour cette première des couches défectueuses Sₓ à l'équipement de commande (500) ; **en ce que** l'équipement d'enlèvement de matériau (700) est configuré pour enlever le matériau d'une zone partielle (T) de l'objet moulé tridimensionnel (200) de la couche imprimée en dernier S_{N} jusqu'à la première des couches défectueuses Sₓ pour laquelle un signal d'erreur a été généré, dans lequel l'équipement d'enlèvement de matériau (700) est réalisé de telle sorte que lors de l'enlèvement du matériau, des couches Sₙ entières peuvent être enlevées.

2. Dispositif (100) selon la revendication 1, **caractérisé en ce que** la zone partielle (T) de l'objet moulé tridimensionnel (200) de la couche imprimée en dernier S_{N} jusqu'à la couche défectueuse Sₓ comprend au moins une couche Sₙ de préférence complète, en particulier entre deux et quatre couches Sₙ de préférence complètes, de préférence plus de quatre couches Sₙ de préférence complètes.

3. Dispositif (100) selon l'une quelconque des revendications précédentes, **caractérisé en ce que** l'équipement d'enlèvement de matériau (700) est réalisé pour un usinage par enlèvement de copeaux, en particulier par fraisage, meulage, de préférence polissage et/ou grattage.

4. Dispositif (100) selon l'une quelconque des revendications précédentes, **caractérisé en ce que** l'équipement d'enlèvement de matériau (700) est réalisé de telle sorte que lors de l'enlèvement du matériau, l'épaisseur d'une couche Sₙ ou l'épaisseur d'au moins deux couches Sₙ peut être enlevée de préférence complètement.

5. Dispositif (100) selon la revendication 1, **caractérisé en ce que** l'équipement de surveillance (600) est réalisé sous forme d'équipement de surveillance optique, en particulier d'une caméra CCD, d'une caméra CCD en combinaison avec un faisceau laser, d'un équipement de balayage optique ou mécanique, d'un équipement de mesure d'épaisseur de couche ou d'un laser de mesure.

6. Dispositif (100) selon l'une quelconque des revendications précédentes, **caractérisé en ce que** l'équipement de distribution de matériau (300) est réalisé de telle sorte qu'il peut être amené dans une position de stationnement où est disposé un poste de service (800) pour contrôler un dysfonctionnement de l'équipement de distribution de matériau (300) et pour éliminer le dysfonctionnement éventuel.

7. Dispositif (100) selon l'une quelconque des revendications précédentes, **caractérisé en ce que** le substrat d'impression (400) est monté rotatif autour d'un axe de rotation par rapport audit au moins un équipement de distribution de matériau (300).

8. Dispositif (100) selon l'une quelconque des revendications précédentes, **caractérisé en ce que** l'équipement d'entraînement (410) est réalisé pour positionner l'équipement de distribution de matériau (300) par rapport au substrat d'impression (400) qui est fixe dans la direction verticale, ou pour positionner le substrat d'impression (400) par rapport à l'équipement de distribution de matériau (300) qui est fixe dans la direction verticale.

9. Dispositif (100) selon l'une quelconque des revendications 1 à 8, **caractérisé en ce que** l'équipement d'enlèvement de matériau (700) présente un outil d'enlèvement de matériau pour l'usinage par enlèvement de copeaux de l'objet moulé (200), dans lequel l'outil d'enlèvement de matériau couvre le substrat d'impression (400) dans au moins une étendue de telle sorte que l'équipement d'enlèvement de matériau (700) enlève complètement les couches S_{N} à Sₓ.

10. Dispositif (100) selon la revendication 9, **caractérisé en ce que** l'équipement d'enlèvement de matériau (700) et le substrat d'impression (400) sont mobiles en hauteur l'un par rapport à l'autre, dans lequel la hauteur est prédéfinie par l'équipement d'évaluation (610) conformément à la zone partielle (T) à enlever des couches défectueuses S_{N} à Sₓ de l'objet moulé (200), et **en ce que** l'outil d'enlèvement de matériau enlève les couches complètes S_{N} à Sₓ dans une seule étape de travail.

11. Dispositif (100) selon l'une quelconque des revendications 9 ou 10, **caractérisé en ce que** l'outil d'enlèvement de matériau de l'équipement d'enlèvement de matériau (700) présente une étendue longitudinale le long d'un axe (710), peut tourner autour de son axe (710) et est réalisé de manière cylindrique ou conique.

12. Procédé permettant de fabriquer un article moulé tridimensionnel (200) par application de matériau par couches Sₙ, où n = 1 à N, présentant les étapes suivantes consistant à :
- appliquer un matériau, qui peut être solidifié de manière physique ou chimique, par couches Sₙ sur un substrat d'impression (400) ;
- contrôler l'article moulé tridimensionnel (200) quant à au moins un défaut présent ;
- niveler chaque couche Sₙ appliquée respectivement ;
- constater une couche Sₓ de l'article moulé tridimensionnel (200) dans laquelle ledit au moins un défaut a été détecté ;
- contrôler les couches Sₙ suivantes, où n = x+1, x+2, ..., quant à des variations de géométrie défectueuses de l'objet moulé (200) ;
**caractérisé en ce que**
- un signal d'erreur est généré pour cette première des couches défectueuses Sₓ et est retransmis à un équipement de commande (500) si une variation de géométrie défectueuse des couches Sₙ suivantes, où n = x+1, x+2, ..., a été détectée qui dépasse une mesure prédéterminée ;
- l'application du matériau dans la couche S_{N} est arrêtée conformément au signal d'erreur ;
- dans les données d'image (210) de l'objet moulé (200), un pointeur de trancheuse (Zₛ) est placé sur la première couche défectueuse Sₓ ;
- une zone partielle (T) de l'objet moulé tridimensionnel (200) est enlevée de la couche imprimée en dernier S_{N} jusqu'à la couche défectueuse Sₓ pour laquelle un signal d'erreur a été généré, dans lequel les couches S_{N} sont enlevées complètement jusqu'à la couche Sₓ, et
- ensuite, les couches enlevées précédemment et d'autres couches éventuelles sont appliquées par couches jusqu'à l'achèvement de l'objet moulé et sont contrôlées.

13. Procédé selon la revendication 12, **caractérisé en ce que** la zone partielle (T) de l'objet moulé tridimensionnel (200) comprend de la couche imprimée en dernier S_{N} jusqu'à la couche défectueuse Sₓ au moins une couche Sₙ de préférence complète, en particulier entre deux et quatre couches Sₙ de préférence complètes, de préférence plus de quatre couches Sₙ de préférence complètes.

14. Procédé selon l'une quelconque des revendications 12 ou 13, **caractérisé en ce que** les couches Sₙ sont enlevées par enlèvement de copeaux, en particulier par fraisage, de préférence par polissage, meulage et/ou grattage.

15. Procédé selon l'une quelconque des revendications 12 à 14, **caractérisé en ce que** lors de l'enlèvement du matériau, l'épaisseur d'une couche Sₙ ou l'épaisseur d'au moins deux couches Sₙ est enlevée de préférence complètement.

16. Procédé selon l'une quelconque des revendications 12 à 15, **caractérisé en ce que** le substrat d'impression (400) tourne autour d'un axe de rotation (420).

17. Procédé selon l'une quelconque des revendications 12 à 16, **caractérisé en ce qu'**un équipement de distribution de matériau (300) est positionné par un équipement d'entraînement (410) par rapport au substrat d'impression (400) qui est fixe dans la direction verticale, ou le substrat d'impression (400) est positionné par rapport à l'équipement de distribution de matériau (300) qui est fixe dans la direction verticale.

18. Procédé selon l'une quelconque des revendications 12 à 17, **caractérisé en ce qu'**un pointeur d'objet (Zₒ) suit le pointeur de trancheuse (Zₛ) jusqu'à ce que la première couche défectueuse Sₓ soit atteinte.

19. Procédé selon l'une quelconque des revendications 12 à 18, **caractérisé en ce que** les couches sont appliquées au moyen d'un équipement de distribution de matériau (300) sur le substrat d'impression (400) ou sur la couche consolidée, qui se trouve sur celui-ci, de l'objet moulé (200), et **en ce qu'**entre la génération du signal d'erreur et l'application consécutive d'une nouvelle couche Sₙ, l'équipement de distribution de matériau (300) est contrôlé quant à un dysfonctionnement, et si un dysfonctionnement est alors détecté, celui-ci est éliminé.

20. Procédé selon l'une quelconque des revendications 12 à 19, **caractérisé en ce que** les couches S_{N} sont enlevées complètement jusqu'à la couche Sₓ en une seule opération.
